# EUROPEAN PATENT APPLICATION

(11) **EP 4 668 195 A1**
(43) Date of publication of application: **24.12.2025**
(21) Application number: 23923057.6
(22) Date of filing: 05.12.2023
(51) Int. Cl.: G06Q 40/03, G06Q 50/26, G06Q 50/06, G06Q 50/40, G06Q 30/02

(54) **FINANCIAL SERVICE METHOD ON BASIS OF ELECTRICAL ENERGY IN EV ECOSYSTEM, AND DEVICE FOR PERFORMING METHOD**

(30) Priority: 17.02.2023 KR 20230021559
(71) Applicant: Aizen Global Co., Inc., Seoul 07242 (KR)
(72) Inventor: KANG, Jung Seok, Seoul 04386 (KR)
(74) Representative: AWA Sweden AB
(86) International application number: PCT/KR2023/019938
(87) International publication number: WO 2024/172258

(57) **Abstract**

The present invention relates to a financial service method on the basis of electrical energy in an EV ecosystem, and a device for performing the method. The financial service method on the basis of electrical energy in an EV ecosystem may comprise the steps of: receiving, by an EV ecosystem management device, EV eco data from an EV ecosystem participating device; and by the EV ecosystem management device, providing a financial service to the EV ecosystem participating device on the basis of the EV eco data.

## Description

### [Technical Field]

The present invention relates to a method of providing a financial service based on electric energy in an electric vehicle (EV) ecosystem, and a device for performing the method. More specifically, the present invention relates to a method of providing a financial service based on electric energy in an EV ecosystem for providing a financial service to participants in an EV ecosystem environment on the basis of electric energy produced within an EV ecosystem environment, and a device for performing the method.

### [Background Art]

The automobile industry is an industry in which technological and business ecosystems change according to changes in technological resources. With the introduction of electric vehicles (EVs), various ecosystems may be formed between EV-related businesses and EV-related technologies.

When EVs are used, EV charging may trigger various changes in industrial ecosystems. Issues related to the increase of charging facilities for EV charging and power supply to EV charging facilities, issues related to reduction of environmental pollution due to EV use, issues related to data generated during EV charging and operation, and various other economic and industrial issues different from the existing issues may arise.

Research is needed on methods of managing these various issues that may arise from EVs through ecosystems and connecting various entities within the ecosystem to generate synergy and develop new industries.

The related art is disclosed in Korean Registered Patent No. 10-2283148.

### [Description of Invention]

### [Technical Problem]

The present invention aims to resolve all of the limitations described above.

In addition, the present invention aims to provide a financial service based on electric energy in an electric vehicle (EV) ecosystem environment.

In addition, the present invention aims to provide a financial service based on EV eco data of EV ecosystem participation devices participating in an EV ecosystem environment.

### [Technical Solution]

To achieve the purposes above, the representative component of the present invention is as below.

According to an aspect of the present invention, there is provided a method of providing a financial service based on electric energy in an electric vehicle (EV) ecosystem, comprising receiving, by an EV ecosystem management device, EV eco data from EV ecosystem participation devices and providing, by the EV ecosystem management device, a financial service to the EV ecosystem participation device on the basis of the EV eco data.

Meanwhile, wherein the providing of the financial service includes predicting, by the EV ecosystem management device, E-points and carbon emission rights that will be generated in the future on the basis of the EV eco data; and providing, by the EV ecosystem management device, the financial service using the E-points and the carbon emission rights as collateral.

Further, wherein the EV ecosystem participation devices include a user, an EV charging station, and an EV power plant, and the EV ecosystem management device provides different financial services to new EV charging stations and new EV power plants, which will be newly installed, and existing EV charging stations and existing EV power plants that have been installed.

According to another aspect of the present invention, there is provided an electric vehicle (EV) ecosystem management device for providing a financial service based on electric energy in an EV ecosystem, which is implemented to receive EV eco data from EV ecosystem participation devices; and provide a financial service to the EV ecosystem participation device on the basis of the EV eco data.

Meanwhile, wherein the providing of the financial service includes predicting, by the EV ecosystem management device, E-points and carbon emission rights that will be generated in the future on the basis of the EV eco data; and providing, by the EV ecosystem management device, the financial service using the E-points and the carbon emission rights as collateral.

Further, wherein the EV ecosystem participation devices include a user, an EV charging station, and an EV power plant, and the EV ecosystem management device provides different financial services to new EV charging stations and new EV power plants, which will be newly installed, and existing EV charging stations and existing EV power plants that have been installed.

### [Advantageous Effects]

According to the present invention, a financial service based on electric energy in an electric vehicle (EV) ecosystem environment is provided.

According to the present invention a financial service based on EV eco data of EV ecosystem participation devices participating in an EV ecosystem environment is provided.

### [Description of Drawings]

FIG. 1 is a conceptual diagram illustrating an EV ecosystem according to an embodiment of the present invention.
FIG. 2 is a conceptual diagram illustrating the operation of an EV ecosystem management device according to an embodiment of the present invention.
FIG. 3 is a conceptual diagram illustrating the EV ecosystem environment and the EV ecosystem according to an embodiment of the present invention.
FIG. 4 is a conceptual diagram illustrating the operation of the EV ecosystem participation device management unit according to an embodiment of the present invention.
FIG. 5 is a conceptual diagram illustrating the operation of the EV ecosystem participation device management unit according to an embodiment of the present invention.
FIG. 6 is a conceptual diagram illustrating a method of managing a network by the EV ecosystem network management unit according to an embodiment of the present invention.
FIG. 7 is a conceptual diagram illustrating a method of managing E-points within an EV ecosystem environment based on ecosystem participation device groups according to an embodiment of the present invention.
FIG. 8 is a conceptual diagram illustrating an operation of an EV ecosystem point management unit according to an embodiment of the present invention.
FIG. 9 is a conceptual diagram illustrating the operation of the EV ecosystem point management unit according to an embodiment of the present invention.
FIG. 10 is a conceptual diagram illustrating the operation of a carbon emission right management unit of an EV ecosystem according to an embodiment of the present invention.
FIG. 11 is a conceptual diagram illustrating a method of generating and recovering carbon emission rights according to an embodiment of the present invention.
FIG. 12 is a conceptual diagram illustrating a method of facilitating liquidity and trading carbon emission rights according to an embodiment of the present invention.
FIG. 13 is a conceptual diagram illustrating a method of trading carbon emission rights according to an embodiment of the present invention.
FIG. 14 is a conceptual diagram illustrating a method of providing incentives according to a power generation source when generating electric energy according to an embodiment of the present invention.
FIG. 15 is a conceptual diagram illustrating a method of determining carbon emission rights according to a power generation source when generating electric energy according to an embodiment of the present invention.
FIG. 16 is a conceptual diagram illustrating a method of providing electric energy to an EV according to an embodiment of the present invention.
FIG, 17 is a conceptual diagram illustrating an algorithm for determining electric energy prices using an EV according to an embodiment of the present invention.
FIG. 18 is a conceptual diagram illustrating a method of providing a financial service based on electric vehicle (EV) eco data according to an embodiment of the present invention.
FIG. 19 is a conceptual diagram illustrating a method of providing a financial service based on EV eco data according to an embodiment of the present invention.
FIG. 20 is a conceptual diagram illustrating a method of providing financial services to EV charging stations according to an embodiment of the present invention.
FIG. 21 is a conceptual diagram illustrating a method of providing financial services to EV power plants according to an embodiment of the present invention.

### [Modes of the Invention]

The detailed description of the present invention will be made with reference to the accompanying drawings showing examples of specific embodiments of the present invention. These embodiments will be described in detail such that the present invention can be performed by those skilled in the art. It should be understood that various embodiments of the present invention are different but are not necessarily mutually exclusive. For example, a specific shape, structure, and characteristic of an embodiment described herein may be implemented in another embodiment without departing from the scope and spirit of the present invention. In addition, it should be understood that a position or arrangement of each component in each disclosed embodiment may be changed without departing from the scope and spirit of the present invention. Accordingly, there is no intent to limit the present invention to the detailed description to be described below. The scope of the present invention is defined by the appended claims and encompasses all equivalents that fall within the scope of the appended claims. Like reference numerals refer to the same or like elements throughout the description of the figures.

Hereinafter, in order to enable those skilled in the art to practice the present invention, exemplary embodiments of the present invention will be described in detail with reference to the accompanying drawings.

Hereinafter, for convenience of description, the present invention discloses the provision of a financial service mainly based on a value evaluation of a battery for a battery electric vehicle, but the method of providing a financial service based on the battery electric vehicle itself, which includes the battery for the battery electric vehicle, may be included in the embodiment of the present invention.

In addition, hereinafter, for convenience of description, it is assumed that the battery electric vehicle residual value is determined based on a residual value of a battery for a battery electric vehicle, but the battery electric vehicle residual value may be determined by various factors other than the battery, and these embodiments may also be included in the scope of the present invention.

Hereinafter, the disclosed electric vehicle (EV), EV charging station, EV power plant, user company may be interpreted as EVs, EV charging stations, EV power plants, users, user devices of companies, servers, and the like, which are capable of processing data.

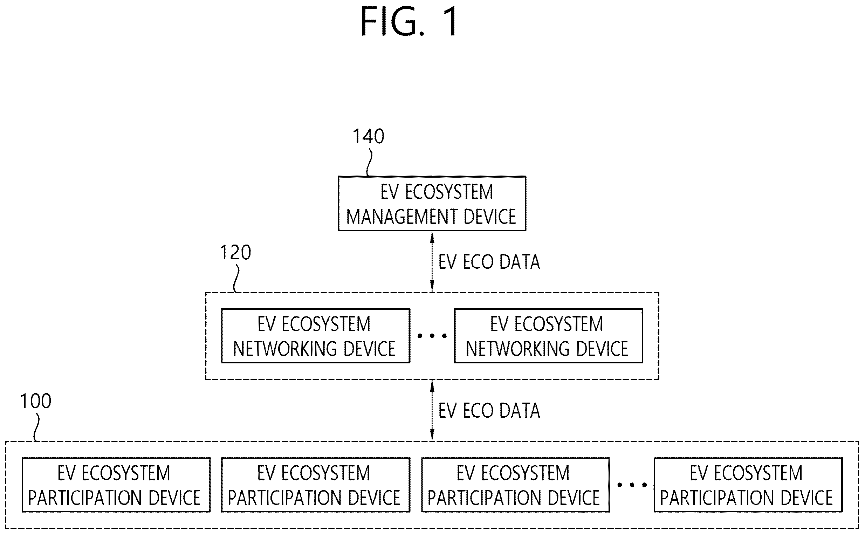

FIG. 1 is a conceptual diagram illustrating an EV ecosystem according to an embodiment of the present invention.

In FIG. 1, an EV ecosystem implemented and expanded based on EVs is disclosed.

Referring to FIG. 1, the EV ecosystem is a system for managing economic and/or industrial changes caused by operations of EVs as a single ecosystem. The ecosystem managed by the EV ecosystem may be expressed by the term "EV ecosystem environment."

The EV ecosystem may include an EV ecosystem participation device 100, an EV ecosystem networking device 120, and an EV ecosystem management device 140.

The EV ecosystem participation device 100 may be a device that participates in the EV ecosystem. The EV ecosystem participation device 100 may be devices of various entities having economic and industrial relevance to the operations of EVs, such as EVs, a user device of a user driving the EV, a charger for providing power to EVs, a charging station for providing power to EVs, and a device of a company associated with EVs (e.g., a corporate service provision server). The EV ecosystem participation device 100 generates EV eco data, and the EV eco data may be transmitted to the EV ecosystem management device 140 through the EV ecosystem networking device 120.

The EV ecosystem participation device 100 may be a device capable of utilizing E-points. A specific company may purchase carbon emission rights from other companies and users based on E-points and may also sell products or services produced by the company based on E-points. That is, even when a device is not directly related to EVs but engages in economic activities based on E-points related to carbon emission rights, the device may operate within the EV ecosystem environment as an EV ecosystem participation device 100.

The EV eco data may include various types of data for managing and implementing the EV ecosystem. EV eco data may include different information depending on the EV ecosystem participation device 100. For example, EV eco data generated by EVs may include charging data, operation data, and the like, and EV eco data generated by EV charging stations may include power supply data, charging statistics data, and the like

The EV ecosystem networking device 120 may be implemented to form a network between the EV ecosystem participation devices 100. The EV ecosystem participation devices 100 may be expanded and added within the EV ecosystem, and the EV ecosystem networking device 120 may be implemented to establish the network between EV ecosystem participation devices 100. For example, when a new EV is operated or a new EV charging station and a new EV power plant are added, identifiers may be assigned to each of the new EVs, the new EV charging station, and the new EV power plant. The EV ecosystem networking device 120 may receive EV eco data generated from the new EV, the new EV charging station, and the new EV power plant and transmit the data to the EV ecosystem management device 140.

The EV ecosystem management device 140 may be implemented to manage the EV ecosystem based on the EV eco data collected by the EV ecosystem networking device 120. For example, the EV ecosystem management device 140 may set exchange points such as E-points for economic integration within the EV ecosystem and enable the use of E-points through an integrated payment system. More specifically, the EV ecosystem management device 140 may convert various industrial and economic activities performed within the EV ecosystem into units such as E-points and provide an integrated payment system to utilize the E-points in various areas within the EV ecosystem.

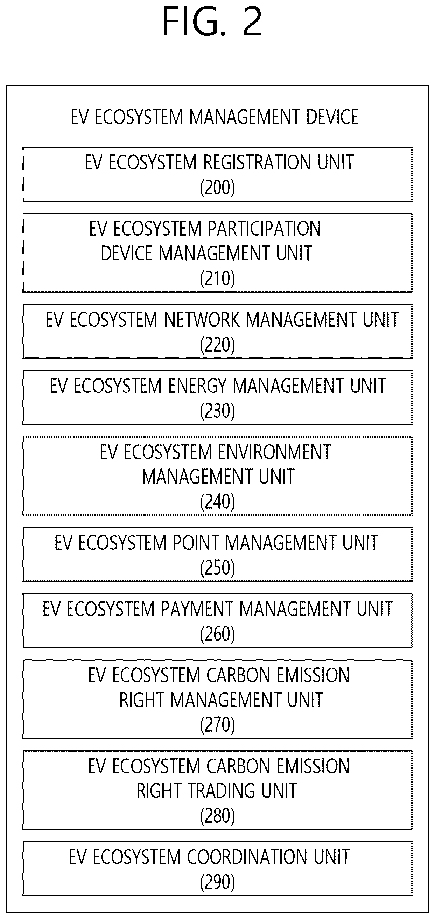

FIG. 2 is a conceptual diagram illustrating the operation of an EV ecosystem management device according to an embodiment of the present invention.

In FIG. 2, an operation in which the EV ecosystem management device participating in the EV ecosystem manages a plurality of EV ecosystem participation devices is disclosed.

Referring to FIG. 2, the EV ecosystem management device may include an EV ecosystem registration unit 200, an EV ecosystem participation device management unit 210, an EV ecosystem network management unit 220, an EV ecosystem energy management unit 230, an EV ecosystem environment management unit 240, an EV ecosystem point management unit 250, an EV ecosystem payment management unit 260, an EV ecosystem carbon emission right management unit 270, an EV ecosystem carbon emission right trading unit 280, and an EV ecosystem coordination unit 290.

The EV ecosystem registration unit 200 may be implemented to register EV ecosystem participation devices. The EV ecosystem registration unit 200 may assign identification information to EV ecosystem participation devices. Based on the identification information, EV ecosystem participation devices that have generated EV eco data may be distinguished, and the EV eco data may be processed on the EV ecosystem management device.

The EV ecosystem participation device management unit 210 may be implemented to manage relationships between EV ecosystem participation devices. A plurality of EV ecosystem participation devices may form hierarchical relationships with each other or may be grouped together and managed as EV ecosystem participation device groups considering mutual relationships.

The EV ecosystem participation device layers and the EV ecosystem participation device groups managed by the EV ecosystem participation device management unit 210 may be adaptively changed, and the management of networks between EV ecosystem participation devices, E-points, E-point payments, and the like may change according to changes in EV ecosystem participation device layers and EV ecosystem participation device groups.

The EV ecosystem network management unit 220 may be implemented to manage networks between EV ecosystem participation devices. The networks may be set differently according to addition and omission of EV ecosystem participation devices and changes in EV ecosystem participation device layers and EV ecosystem participation device groups, and the EV ecosystem network management unit 220 may manage the networks between EV ecosystem participation devices.

The EV ecosystem energy management unit 230 may be implemented to manage electrical energy for charging EVs. Electrical energy may be generated based on various sources (thermal, nuclear, solar, wind, and the like), and the generated electrical energy may be delivered to EVs through EV charging stations. The demand for electrical energy may vary with time and location.

The EV ecosystem energy management unit 230 may enable electrical energy to be efficiently utilized in the EV ecosystem environment through management of sources generating electrical energy and management of targets using electrical energy. For example, the EV ecosystem energy management unit 230 may set different electrical energy sales costs for each source that generates electrical energy. For example, the more eco-friendly (renewable energy-based generation) the power generation is, the more it reduces carbon emissions, and in consideration of such carbon emission reduction effect, electrical energy prices may be set higher. Alternatively, renewable energy-based generation may be induced by providing incentives for eco-friendly power generation.

Alternatively, electrical energy generated at specific times (e.g., night) may be wasted because there are not many EVs charging. Therefore, considering the demand for electrical energy according to location and time, the electrical energy may be set to be sold at different prices according to time and location. Sales and payment of electrical energy may be performed based on E-points, and E-points may be managed by the EV ecosystem point management unit 250 and the EV ecosystem payment management unit 260.

The EV ecosystem environment management unit 240 may be implemented to manage factors related to environmental protection in the EV ecosystem environment and manage incentives according to environmental protection. For example, the EV ecosystem environment management unit 240 may determine the allocation of E-points, the provision of carbon emission rights, and the like, considering incentives for environmental protection and carbon emission reduction within the EV ecosystem environment, such as how much incentive to provide when selling solar-based electrical energy, and how much value to assign to carbon emission rights of users based on carbon emission reduction from EV use.

The EV ecosystem point management unit 250 may be implemented to manage E-points. E-points may be exchange points for economic activities within the EV ecosystem environment. For example, E-points may be generated by users converting fiat currency or cryptocurrency for EV charging. Alternatively, E-points may be allotted to users considering carbon emissions saved through EV operation of users. Alternatively, E-points may be paid in the form of incentives (or subsidies) considering environmental protection to power plants generating electrical energy based on solar power. E-points may also be used to purchase products or services of various companies constituting the EV ecosystem environment.

The EV ecosystem point management unit 250 may control inflation and deflation of E-points through issuance and cancellation of E-points such that E-point-based economic activities may occur within the EV ecosystem environment.

The EV ecosystem payment management unit 260 may be implemented to manage an E-point-based payment system. The E-point-based payment system may install payment systems in online stores/offline stores capable of payment based on E-points and manage the payment systems to enable E-point-based payments.

The EV ecosystem carbon emission right management unit 270 may be implemented to manage carbon emission rights of EV ecosystem participation devices. Management of carbon emission rights for users (individuals or companies) may be performed through the EV ecosystem carbon emission right management unit 270. Individuals may acquire carbon emission rights through personal activities that relatively reduce carbon emissions, such as EV operation and EV charging times. Companies may acquire corporate carbon emission rights through activities (EV production, renewable energy-based electrical energy production, and the like) that relatively reduce carbon emissions. Conversely, when individuals or companies perform activities that relatively increase carbon emissions, carbon emission rights may be recovered again.

The EV ecosystem carbon emission right management unit 270 may manage carbon emission rights to generate or recover carbon emission rights based on activity data of EV ecosystem participation devices participating in the EV ecosystem environment as individuals and companies.

In addition, the EV ecosystem carbon emission right management unit 270 may liquidate carbon emission rights into tradeable units to enable trading of carbon emission rights.

The EV ecosystem carbon emission right trading unit 280 may be implemented to enable trading of carbon emission rights between EV ecosystem participation devices. Carbon emission rights allocated to individuals or companies may be traded, and the EV ecosystem carbon emission right trading unit 280 may provide an exchange system to enable trading of carbon emission rights.

The EV ecosystem coordination unit 290 may be implemented to coordinate and control the EV ecosystem participation devices, the EV ecosystem networking device, and the like operating within the EV ecosystem.

In addition, the EV ecosystem coordination unit 290 may be implemented as a processor to control operations of the EV ecosystem registration unit 200, the EV ecosystem participation device management unit 210, the EV ecosystem network management unit 220, the EV ecosystem energy management unit 230, the EV ecosystem environment management unit 240, the EV ecosystem point management unit 250, the EV ecosystem payment management unit 260, the EV ecosystem carbon emission right management unit 270, and the EV ecosystem carbon emission right trading unit 280.

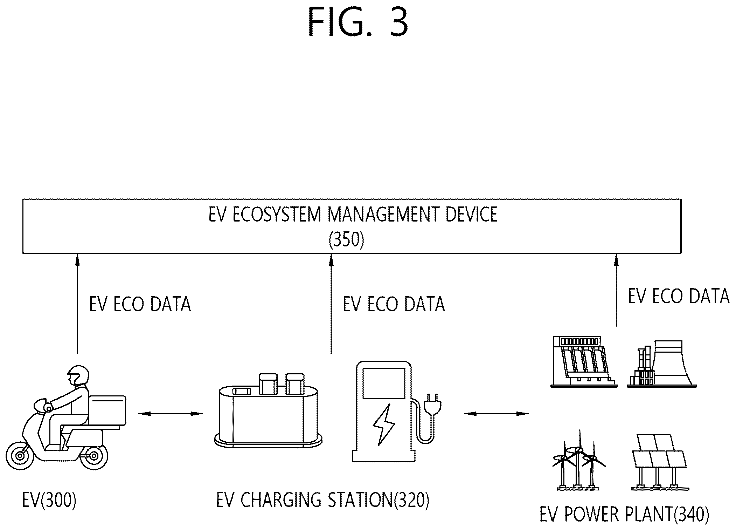

FIG. 3 is a conceptual diagram illustrating the EV ecosystem environment and the EV ecosystem according to an embodiment of the present invention.

FIG. 3 shows an example of a method of implementing an EV ecosystem environment based on EV ecosystem participation devices and managing the EV ecosystem based on an EV ecosystem management device. In FIG. 3, for convenience of explanation, an EV ecosystem environment based on an operation in which an EV charging station receives electrical energy from an EV power plant and a user charges an EV through the EV charging station is exemplarily disclosed, but various other EV and electrical energy-based industrial and economic activity areas may also be implemented as an EV ecosystem environment, and such embodiments may also be included in the scope of the present invention.

Referring to FIG. 3, an EV 300 may be an electric motorcycle, and the user may provide a delivery service using the EV 300. The battery for driving the EV 300 may be charged in the form of replacement at an EV charging station 320.

The user of the EV 300 may charge E-points through an app. E-point charging may be accomplished through various methods. For example, E-point charging may be accomplished through various methods such as purchasing E-points with fiat currency, converting to E-points through sales of personal carbon emission rights, and the like

The user of the EV 300 may convert the E-points to mileage (or chargeable electrical energy) through the app. For example, 100 E-points may be converted to 100 km of mileage and exchanged for electrical energy (or a battery) capable of driving 100 km.

When the user exchanges the EV battery, the mileage may be deducted and a new battery may be installed in the EV 300.

Data related to the EV battery exchange activity of the user and the EV operation of the user may be transmitted as EV eco data to the EV ecosystem management device through the EV ecosystem networking device.

Carbon emission rights may be allocated to the user based on the EV battery exchange activity of the user and the EV operation of the user. For example, based on EV eco data of the user, such as EV operation mileage of the user, battery exchange activity of the user, and EV operation records of the user, activities of the user that have reduced carbon emissions and activities of the user that have enabled the battery life to be maintained for a long time are analyzed based on the EV eco data, and carbon emission rights may be allocated to the user based on the analysis.

The user may trade the carbon emission rights through an app installed on the user device to convert the carbon emission rights to E-points, and the E-points may be utilized for the user to exchange a battery later or purchase goods/services from companies corresponding to EV ecosystem participation devices.

The EV charging station 320 may be implemented for EV battery exchange, EV battery charging, and the like. The EV charging station 320 may transmit information about EV battery exchange data, EV battery charging data, and the like of a plurality of users as EV eco data to the EV ecosystem management device.

The electrical energy used for charging at the EV charging station 320 may be sold based on different amounts of E-points. Generated electrical energy is wasted if not used. Therefore, the EV ecosystem management device may adaptively set E-points per kWh for electrical energy according to time or location based on EV eco data collected from a plurality of EV charging stations 320 to sell electrical energy at different prices.

In addition, the electrical energy may be sold at different prices for each EV power plant 340 in consideration of the power generation source of the EV power plant 340. For example, electrical energy generated based on renewable energy (solar, wind, and the like) may be purchased by paying relatively higher E-points upon purchase. That is, incentives are provided upon the purchase of electrical energy to promote increased power generation based on renewable energy at the EV power plants 340. Alternatively, when renewable energy-based power generation is performed, carbon emission rights are provided to the EV power plant 340 performing renewable energy-based power generation, and the EV power plant 340 may sell the carbon emission rights, thereby acquiring E-points.

Power generation-related data of the EV power plant 340 may also be transmitted as EV eco data to the EV ecosystem management device.

The EV ecosystem environment may be implemented as described above, and this EV ecosystem environment is one example in which various other EV ecosystem participation devices may operate with various industrial and economic relationships within the EV ecosystem environment.

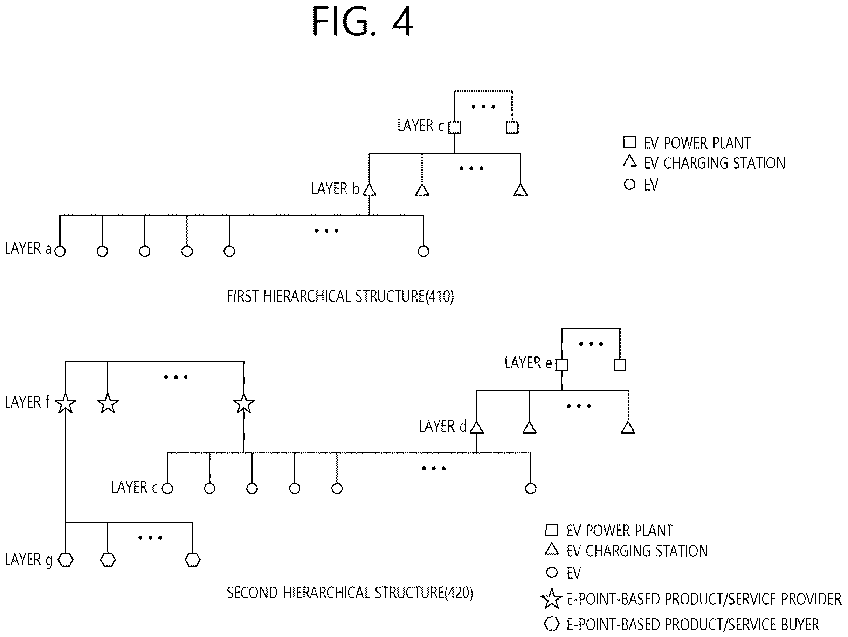

FIG. 4 is a conceptual diagram illustrating the operation of the EV ecosystem participation device management unit according to an embodiment of the present invention.

In FIG. 4, a method of generating a hierarchical relationship between EV ecosystem participation devices by an EV ecosystem participation device management unit is disclosed.

Referring to FIG. 4, the EV ecosystem participation device management unit may form a hierarchical structure between EV ecosystem participation devices. The hierarchical structure between EV ecosystem participation devices may be used to group EV ecosystem participation devices and manage issuance and cancellation of E-points based on E-point usage data within the EV ecosystem participation device groups.

The hierarchy between EV ecosystem participation devices may form a first hierarchical structure 410 based on production, sales, and consumption of electrical energy.

The first hierarchical structure 410 may be formed in the order of EV power plants generating electrical energy, EV charging stations selling the electrical energy supplied through the EV power plants, and EVs receiving the electricity from the EV charging stations. In the first hierarchical structure 410, the EVs may be located in layer a, the EV charging stations in layer b, and the EV power plants in layer c. The hierarchy may ascend from layer a to layer b and to layer c.

More specifically, the first hierarchical structure 410 may be set based on EV eco data of the EVs, the EV charging stations, and the EV power plants. For example, EV charging stations 1 to n receiving electrical energy from EV power plant 1 may form a hierarchical structure, and EVs 1 to n receiving EV batteries from or charging EV batteries in EV charging station 1 may form a hierarchical structure with EV charging station 1.

An EV charging station may receive electrical energy from a plurality of EV power plants, and an EV may also receive electrical energy from a plurality of EV charging stations. Therefore, the same EV charging station and the same EV may be located in a plurality of positions within the same layer. For example, EV charging station 1 may be located in lower layers of not only EV power plant 1 but also EV power plants 2 and 3. An EV may be located in lower layers of not only EV charging station 1 but also EV charging stations 2 and 3.

In the first hierarchical structure 410, a plurality of EV charging stations sharing a larger number of similar EVs may be positioned adjacently at layer b. Also, in the first hierarchical structure 410, a plurality of EV charging stations that are closer to each other may be positioned adjacently at layer b. For example, the similarity between EV charging stations is determined based on the number of identical EVs included in lower layers thereof and the distance between the EV charging stations, and the higher the similarity between EV charging stations, the closer the EV charging stations may be arranged at layer b.

In addition, when a specific EV charging station receives electrical energy from a specific EV power plant more than a first threshold number of times within a first threshold period, the specific EV charging station may be positioned in a lower layer of the specific EV power plant.

When a specific EV receives electrical energy from a specific EV charging station more than a second threshold number of times within a second threshold period, the specific EV may be positioned in a lower layer of the specific EV charging station.

The cycle of an EV receiving electrical energy from an EV charging station is longer than the cycle of an EV charging station receiving electrical energy from an EV power plant, and the EV receiving electrical energy from the EV charging station may be an action that occurs more sporadically than the EV charging station receiving electrical energy from the EV power plant. Therefore, the second threshold period may be set relatively longer than the first threshold period, and the second threshold number of times may be set to a relatively smaller value than the first threshold number of times.

When a sporadic supply of electrical energy occurs through the above described threshold period setting and threshold number setting, an additional layer setting may not be performed in the first hierarchical structure 410, and the first hierarchical structure 410 may continuously change according to changes in industrial and economic situations.

The second hierarchical structure 420 may be formed in relation to utilization of E-points regardless of electrical energy. Considering payments for electrical energy charging of EVs, E-points may flow in the order of EVs, EV charging stations, and EV power plants. The second hierarchical structure 420 may initially be formed based on the first hierarchical structure 410.

E-points may be utilized for various other industrial and economic reasons even when not directly related to utilization of electrical energy. For example, a company that needs to purchase carbon emission rights may purchase carbon emission rights using E-points as an EV ecosystem participation device, and sell products and services based on E-points. In addition, even without operating EVs, individuals may sell carbon emission rights to convert the carbon emission rights to E-points and then purchase products and services of a specific company using the E-points. EV ecosystem participation devices corresponding to such companies and individuals may also be positioned in the second hierarchical structure 420 as layers that purchase E-points and receive E-points in exchange for product/service sales.

The E-point-based second hierarchical structure 420 may generate relationships between upper and lower layers based on the flow of E-points. The party paying E-points is set as the lower layer, and the party receiving E-points may be set as the upper layer.

When E-points are paid n or more times during a third threshold period, the hierarchy may be maintained in the second hierarchical structure 420, and when E-points are paid less than n times during the third threshold period, the hierarchy may be deleted. The third threshold period and n may be set differently for each layer, and economic and industrial relationships become stronger at higher levels of the hierarchy. Therefore, the third threshold period may become relatively shorter, and n may relatively increase.

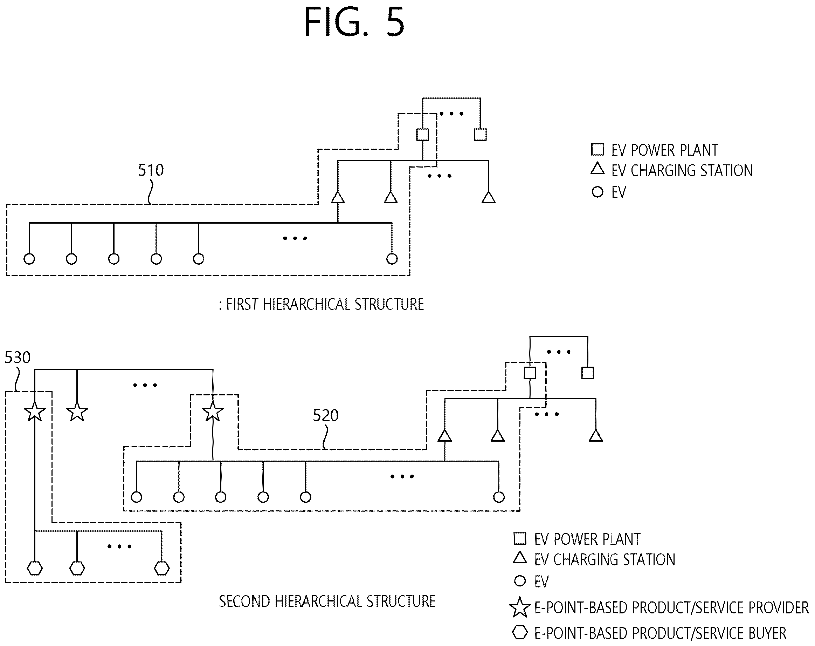

FIG. 5 is a conceptual diagram illustrating the operation of the EV ecosystem participation device management unit according to an embodiment of the present invention.

FIG. 5 shows a method of grouping EV ecosystem participation devices based on hierarchical relationships between EV ecosystem participation devices in the EV ecosystem participation device management unit.

Referring to FIG. 5, EV ecosystem participation devices may be grouped based on the first hierarchical structure and the second hierarchical structure and thus EV ecosystem participation device groups may be determined.

The EV ecosystem participation device groups may be primarily determined based on the first hierarchical structure. The first EV ecosystem participation device group may be determined considering relationships between EVs, EV charging stations, and EV power plants based on the flow of electrical energy.

The first EV ecosystem participation device group 510 may be formed considering EV charging station groups. EV charging stations with similarity greater than or equal to a threshold in layer b are grouped into a single EV charging station group, and EVs and EV power plants associated with the single EV charging station group may be set as a single first EV ecosystem participation device group 510.

The first EV ecosystem participation device group 510 may be expanded based on the second hierarchical structure. The second hierarchical structure is a hierarchical structure considering the flow of E-points. Considering consumption of E-points by users of EVs included in the first EV ecosystem participation device group 510, EV ecosystem participation devices that providing products and services based on E-points may additionally be included in the first EV ecosystem participation device group 510 and thus a second EV ecosystem participation device group 520 may be determined.

In addition, users who do not operate EVs but consume products and services based on E-points and EV ecosystem participation devices that provide products and services based on E-points may be set as a third EV ecosystem participation device group 530.

That is, the second EV ecosystem participation device group 520 may be determined by expanding the first EV ecosystem participation device group 510, and the third EV ecosystem participation device group 530 may be generated independently of the first EV ecosystem participation device group 510.

According to an embodiment of the present invention, the management of E-points may be performed based on the EV eco data generated from the first EV ecosystem participation device group 510, the second EV ecosystem participation device group 520, and the third EV ecosystem participation device group 530.

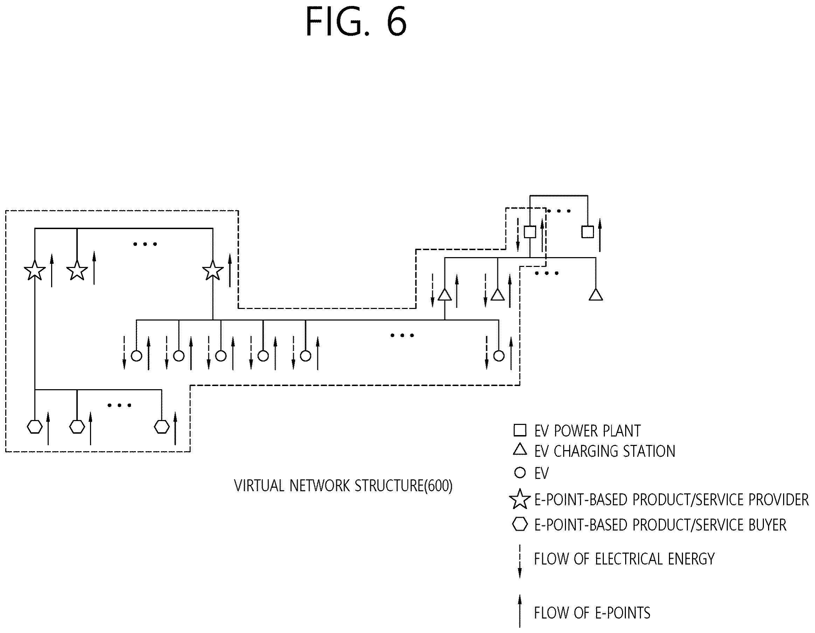

FIG. 6 is a conceptual diagram illustrating a method of managing a network by the EV ecosystem network management unit according to an embodiment of the present invention.

In FIG. 6, a method for the EV ecosystem network management unit to set a network based on relationships between EV ecosystem participation devices is disclosed.

Referring to FIG. 6, the EV ecosystem network management unit may set network relationships between EV ecosystem participation devices considering the first EV ecosystem participation device group, the second EV ecosystem participation device group, and the third EV ecosystem participation device group.

EV eco data generated from EV ecosystem participation devices may include group identification information for EV ecosystem participation device groups including EV ecosystem participation devices.

The EV ecosystem network management unit may form a virtual network structure 600 for EV ecosystem participation device groups considering the first hierarchical structure and the second hierarchical structure. The virtual network structure 600 may not be a physical network structure but a structure considering the hierarchical structures of EV ecosystem participation devices and the EV ecosystem participation device groups.

The virtual network structure 600 may be utilized to process and analyze EV eco data. E-points included in EV eco data, E-points in EV eco data, such as movement of electric energy, and movement data of electric energy may be processed and analyzed on the virtual network structure and utilized as units of analysis for economic activities.

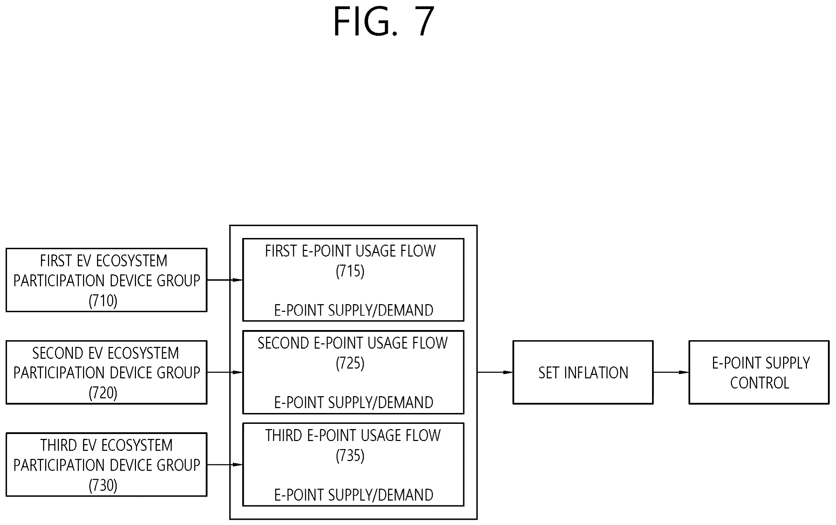

FIG. 7 is a conceptual diagram illustrating a method of managing E-points within an EV ecosystem environment based on ecosystem participation device groups according to an embodiment of the present invention.

In FIG. 7, a method of managing the supply and demand of E-points within EV ecosystem participation device groups to manage the volatility of E-points is disclosed.

Referring to FIG. 7, an E-point supply and an E-point demand may be extracted for each EV ecosystem participation device group through analysis of the supply and demand of E-points in each of a first EV ecosystem participation device group 710, a second EV ecosystem participation device group 720, and a third EV ecosystem participation device group 730.

First, the flow of E-point usage according to supply/demand of electrical energy may be determined based on the E-point supply and the E-point demand in the first EV ecosystem participation device group 710.

In addition, the flow of E-point usage according to supply/demand of electrical energy and the flow of E-point usage, other than for electrical energy, by EV ecosystem participation devices directly related to electrical energy supply/demand may be determined based on the E-point supply and the E-point demand in the second EV ecosystem participation device group 720.

Furthermore, the flow of E-point usage, other than for electrical energy, by ecosystem participation devices with low relevance to electrical energy may be determined based on the E-point supply and the E-point demand in the third EV ecosystem participation device group 730.

The flow of E-point usage based on the first EV ecosystem participation device group 710 may be referred to as "first E-point usage flow 715." The flow of E-point usage based on the second EV ecosystem participation device group 720 may be referred to as "second E-point usage flow 725." The flow of E-point usage based on the third EV ecosystem participation device group 730 may be referred to as "third E-point usage flow 735."

Based on the first E-point usage flow 715, the second E-point usage flow 725, and the third E-point usage flow 735, the supply and demand of E-points in each usage area may be determined, and the value fluctuations of E-points may be managed considering the usage areas.

For example, an overall inflation rate and an inflation rate for each usage area are set, and considering the first E-point usage flow 715, the second E-point usage flow 725, and the third E-point usage flow 735, E-points supplied to the first EV ecosystem participation device group 710, the second EV ecosystem participation device group 720, and the third EV ecosystem participation device group 730 may be adjusted to determine an E-point value within the overall inflation rate.

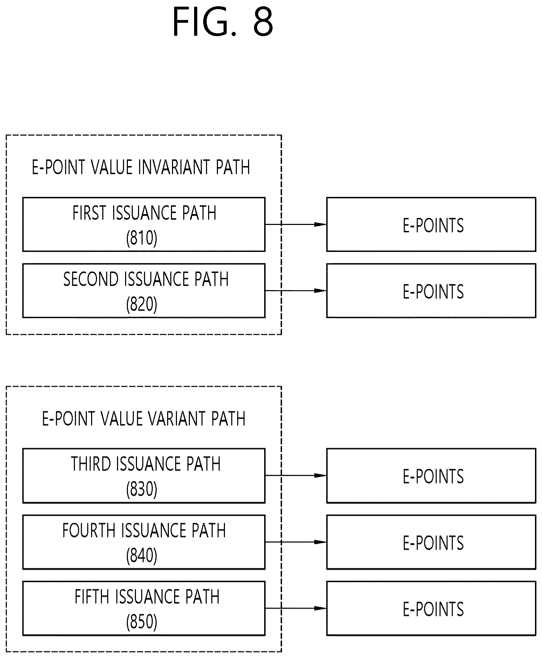

FIG. 8 is a conceptual diagram illustrating an operation of an EV ecosystem point management unit according to an embodiment of the present invention.

In FIG. 8, a method of managing the generation of E-points by an EV ecosystem point management unit is disclosed.

Referring to FIG. 8, the issuance of E-points may be achieved through various paths.

A first issuance path 810 of E-points may be issuance based on fiat currency. When fiat currency is deposited, the fiat currency may be converted to E-points at a set first exchange rate. The first exchange rate may be determined based on an exchange rate between the fiat currency and E-points.

A second issuance path 820 of E-points may be issuance based on cryptocurrency. When cryptocurrency is deposited, the cryptocurrency may be converted to E-points at a set second exchange rate. The second exchange rate may be determined based on the exchange rate between the cryptocurrency and E-points.

A third issuance path 830 of E-points may be issuance based on the production of electric energy. An EV power plant may produce electric energy, and the produced electric energy may be settled and converted based on E-points. Electric energy may be settled based on previously generated E-points but may also be settled based on newly generated E-points. The case in which electric energy is settled based on newly issued E-points may be issuance of E-points through the third issuance path.

A fourth issuance path 840 of E-points may be issuance through sales of services and products by EV ecosystem participating devices. Services and products provided by EV ecosystem participating devices may be settled based on newly issued E-points. Services and products of EV ecosystem participating devices may be settled based on previously generated E-points but may also be settled based on newly generated E-points. The case in which services or products are settled based on newly issued E-points may be issuance of E-points through the fourth issuance path.

A fifth issuance path 850 of E-points may be issuance through sales in carbon emission rights trading by EV ecosystem participating devices. Individuals or companies with EV ecosystem participating devices may settle carbon emission rights based on newly issued E-points. Carbon emission rights of EV ecosystem participating devices may be settled based on previously generated E-points but may also be settled based on newly generated E-points. The case in which carbon emission rights are settled based on newly issued E-points may be issuance of E-points through the fifth issuance path 850.

The first issuance path 810, the second issuance path 820, the third issuance path 830, the fourth issuance path 840, and the fifth issuance path 850 are examples, and E-points may flow into the EV ecosystem through various other issuance paths.

The E-points issued through the first issuance path 810 and the second issuance path 820 may be E-points exchanged based on currency. The E-points issued through the third issuance path 830, the fourth issuance path 840, and the fifth issuance path 850 may be E-points issued in exchange for energy, services, products, and carbon emission rights.

The paths through which E-points flow in through exchange with other currencies, such as the first issuance path 810 and the second issuance path 820, may be referred to as "E-point value invariant paths," and the paths through which E-points flow in based on non-currency products, services, and rights, such as the third issuance path 830, the fourth issuance path 840, and the fifth issuance path 850, may be referred to as "E-point value variant paths."

The EV ecosystem point management unit may immediately convert cryptocurrency and fiat currency exchanged for E-points through the first issuance path 810 and the second issuance path 820 into stable currency (dollars, won, stablecoins, and the like) to reduce the price volatility for E-points.

For the third issuance path 830, the fourth issuance path 840, and the fifth issuance path 850, the inflow of E-points into the EV ecosystem may increase, and the EV ecosystem point management unit may adjust the price of E-points and readjust the exchange rate of E-points with fiat currency considering the increase in the inflow of E-points, fluctuations in the prices of electric energy, fluctuations in the prices of products and services, fluctuations in the prices of carbon emission rights, a set inflation rate and the like.

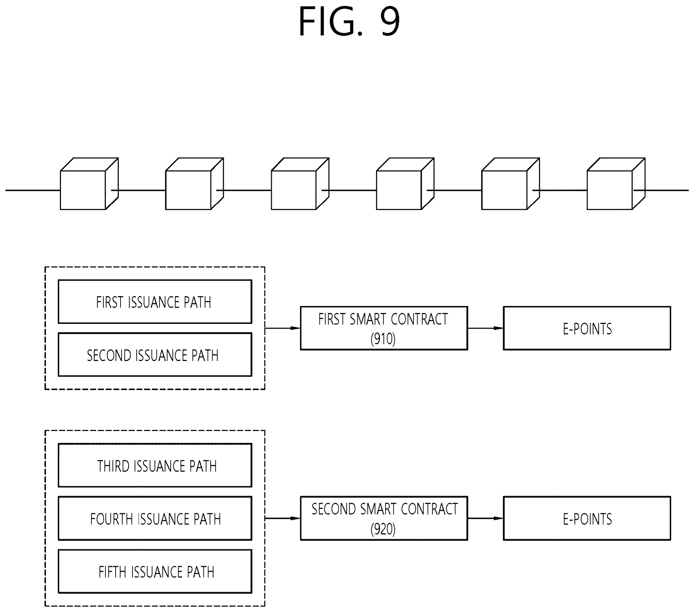

FIG. 9 is a conceptual diagram illustrating the operation of the EV ecosystem point management unit according to an embodiment of the present invention.

FIG. 9 shows a method of managing E-point generation by the EV ecosystem point management unit based on blockchain.

Referring to FIG. 9, when E-points are generated through the first and second issuance paths, a first smart contract 910 on a blockchain may generate E-points based on deposited fiat currency and cryptocurrency considering a time-based exchange rate.

The first smart contract 910 may be implemented to determine E-points corresponding to fiat currency or cryptocurrency deposited to a specific address and generate the determined E-points and transmit the generated E-points to a set address.

When E-points are generated based on the third, fourth, and fifth issuance paths, a second smart contract 920 on the blockchain may determine and provide E-points corresponding to the prices of electric energy, products/services, carbon emission rights, and the like, considering the respective prices thereof at the time of exchange.

The prices of electric energy, products/services, and carbon emission rights may be set by EV ecosystem participating devices providing electric energy, products, services, and carbon emission rights, and may be included and transmitted in transactions.

The second smart contract 920 may receive information about the current prices of electric energy, products, services, and carbon emission rights from an EV ecosystem network management unit, and process transactions transmitted by EV ecosystem participating devices by reflecting the information, to transmit E-points to the EV ecosystem participating devices.

The second smart contract 920 may be implemented to set a threshold number of E-points that may be issued considering a set inflation rate, and when the threshold number of E-points is exceeded, transmit an alarm regarding the increase in the number of E-points to the EV ecosystem network management unit.

In addition, when the number of E-points issued based on the second smart contract 920 exceeds the threshold number of E-points, E-points may be purchased using deposited fiat currency or cryptocurrency to reduce the number of E-points within the EV ecosystem, and perform adjustment such that the change in E-point value does not exceed the set inflation rate.

The set inflation rate may be adaptively adjusted considering an expansion value of the EV ecosystem. As the expansion value of the EV ecosystem increases, the magnitude of the set inflation rate may increase. The expansion value of the EV ecosystem may be set larger as the number of increases in EV ecosystem participating devices and the rate of increase in EV ecosystem participating devices become relatively larger. In addition, considering data on the movement of E-points and the movement of electric energy based on EV ecosystem participating devices, the expansion value of the EV ecosystem may be set larger as the movement of E-points and the movement of electric energy are relatively faster.

That is, according to an embodiment of the present invention, the method of implementing a payment system in an EV ecosystem by an EV ecosystem management device may include: receiving, by an EV ecosystem management device, data regarding E-points within an EV ecosystem; and adjusting, by the EV ecosystem management device, issuance of the E-points based on a set inflation rate.

The data regarding E-points may include data regarding supply and demand of E-points, and the data regarding E-points may be collected based on EV ecosystem participating device groups. The set inflation rate may be adaptively adjusted considering an expansion value of the EV ecosystem.

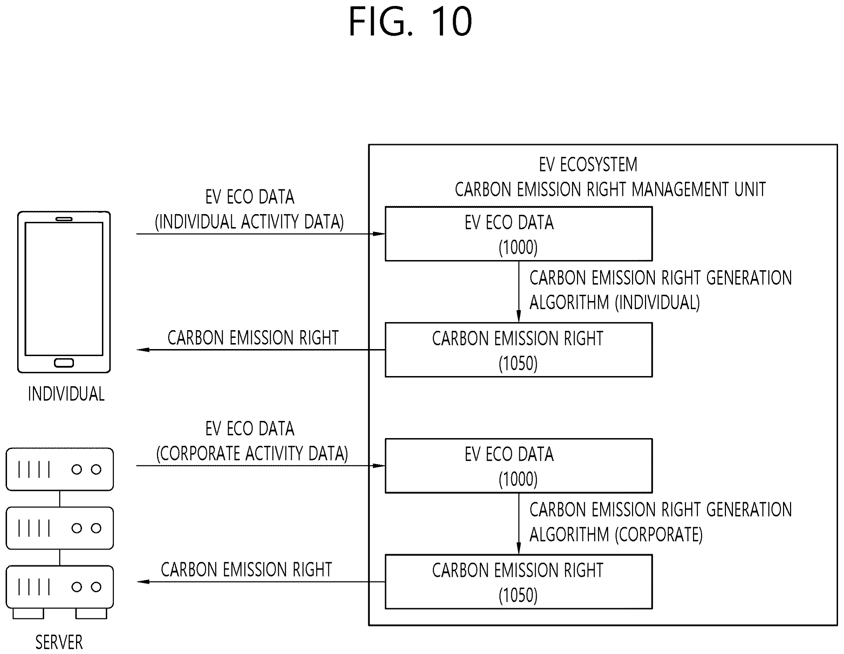

FIG. 10 is a conceptual diagram illustrating the operation of a carbon emission right management unit of an EV ecosystem according to an embodiment of the present invention.

In FIG. 10, an operation of the carbon emission right management unit of the EV ecosystem for managing the generation and retirement of carbon emission rights of individuals and corporations, and for liquidating carbon emission rights to enable trading of carbon emission rights is disclosed.

Referring to FIG. 10, the carbon emission right management unit of the EV ecosystem may manage carbon emission rights 1050 such that the carbon emission rights 1050 are generated and recovered based on EV eco data 1000 including activity data of EV ecosystem participating devices.

The carbon emission right management unit of the EV ecosystem may receive individual activity data related to carbon emission reductions collected through individual user devices (e.g., smartphones) or individual EVs as EV eco data 1000. For example, carbon emission rights 1050 for individuals are generated based on individual electric vehicle operation records, individual electric vehicle battery charging and discharging records, and the like, and the generated carbon emission rights 1050 for individuals may be checked through an application on the user device.

Conversely, the carbon emission right management unit of the EV ecosystem may receive individual activity data related to individual carbon emission increases as EV eco data 1000 and recover carbon emission rights 1050 for individuals. For example, carbon emission rights 1050 for individuals may be recovered based on the individuals operating diesel vehicles and gasoline vehicles.

Furthermore, the carbon emission right management unit of the EV ecosystem may receive corporate activity data related to carbon emission reductions collected based on corporate activities as EV eco data 1000. For example, carbon emission rights 1050 for corporations are generated based on the EV eco data 1000 related to carbon emission reductions by the corporations, such as producing EVs, transiting from fossil fuel-based energy generation structure to renewable energy generation structure, and the like, and the carbon emission rights 1050 for corporations may be checked on corporate servers.

Similarly, the carbon emission right management unit of the EV ecosystem may receive corporate activity data related to corporate carbon emission increases as EV eco data 1000 and recover carbon emission rights 1050. For example, carbon emission rights 1050 for corporations may be recovered based on the corporations producing diesel vehicles, producing gasoline vehicles, and the like.

The carbon emission right management unit of the EV ecosystem may manage carbon emission rights 1050 allocated to individuals and corporations based on an individual carbon emission right generation/recovery algorithm and a corporate carbon emission right generation/recovery algorithm.

The generation of the carbon emission rights 1050 may be based on a carbon amount. For example, the carbon amount reduced by an activity of an individual or corporation is determined, and the carbon emission right 1050 is generated based on the reduced carbon amount and delivered to the individual or corporation. The carbon emission right generation algorithm will be described below.

The carbon emission rights 1050 may be managed by being combined with the existing carbon emission rights 1050 for trading or by being divided into minimum trading units. For example, when the carbon amount corresponding to the existing carbon emission right 1050 is A and the carbon amount corresponding to a newly generated carbon emission right 1050 is B, the carbon emission right 1050 corresponding to the carbon amount A and the carbon emission right 1050 corresponding to the carbon amount B are canceled, and a single new carbon emission right 1050 corresponding to the total A+B may be newly generated and allocated to the user. In another case in which the carbon amount corresponding to the existing carbon emission right 1050 is A and a carbon amount corresponding to a newly generated carbon emission right 1050 is B, the carbon emission rights 1050 corresponding to the total A+B may be divided by C, which is the magnitude of a carbon amount of a tradeable carbon emission right 1050, to generate n tradeable carbon emission rights 1050.

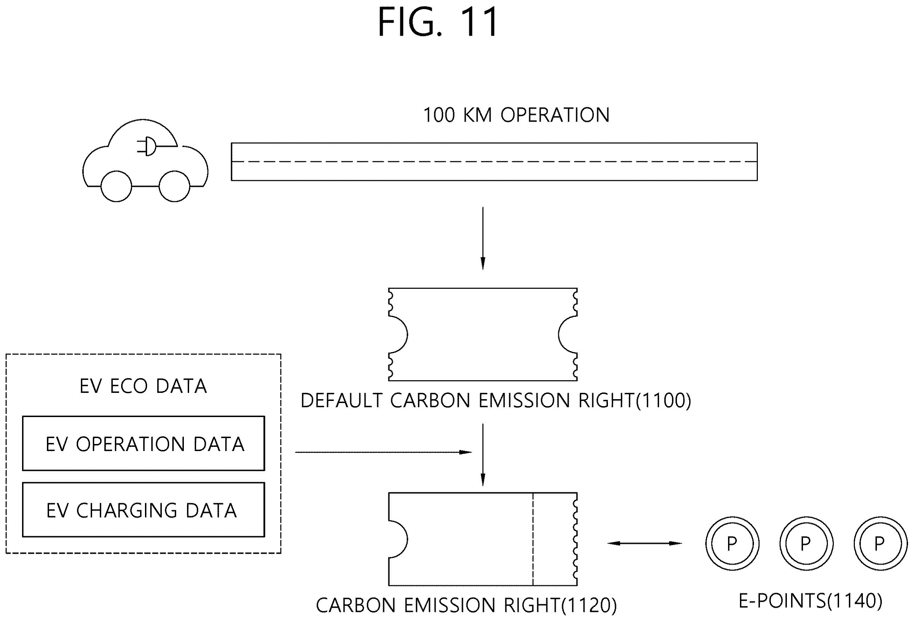

FIG. 11 is a conceptual diagram illustrating a method of generating and recovering carbon emission rights according to an embodiment of the present invention.

In FIG. 11, a carbon emission right generation algorithm for generating individual carbon emission rights is disclosed. Hereinafter, the present invention discloses a method of generating carbon emission rights based on specific sub-data included in EV eco data, but carbon emission rights may also be generated based on various other types of data, and such methods may also be included in the scope of the present invention.

Referring to FIG. 11, the individual carbon emission right generation algorithm may be determined by extracting EV operation data and EV charging data from individual EV eco data.

Basically, default carbon emission rights may be generated based on an EV operation distance included in the EV operation data. For example, when an individual operates an EV for 100 km, a default carbon emission right 1100 corresponding to the operation distance of 100 km may be generated.

The default carbon emission right 1100 may be adjusted in consideration of individual driving habits and individual charging habits from the EV eco data and finally corrected to a carbon emission right 1120 to be granted to the individual.

For example, the more an individual driving habit causes rapid electricity consumption, the more the carbon amount corresponding to the carbon emission right 1120 may be reduced based on the default carbon emission right 1100. Also, the more an individual charging habit rapidly weakens battery performance, the more the carbon amount corresponding to the carbon emission right 1120 may be reduced based on the default carbon emission right 1100. Conversely, the less an individual driving habit causes rapid electricity consumption, the more the carbon amount corresponding to the carbon emission right 1120 may be increased based on the default carbon emission right 1100. Also, the less an individual charging habit rapidly weakens battery performance, the more the final carbon amount corresponding to the carbon emission right may be increased based on the default carbon emission right 1100.

The carbon amount corresponding to the default carbon emission right 1100 and the correction amount corrected in consideration of the operation habit of the user and the charging habit of the user may be adaptively adjusted.

When the carbon emission rights 1120 are generated as described above, the carbon emission rights 1120 may be converted to E-points 1140 to increase the inflow of E-points 1140 into the EV eco ecosystem.

When the issuance of E-points 1140 is within a set inflation considering an expansion value of the EV eco ecosystem, the carbon amount corresponding to the default carbon emission right 1100 and the correction amount corrected in consideration of the operation habit of the user and the charging habit of the user may be fixed.

When the issuance of E-points 1140 is outside the set inflation considering the expansion value of the EV eco ecosystem, the carbon amount corresponding to the default carbon emission right 1100 may be set to decrease, and the correction amount corrected in consideration of the charging habit of the user may also be set to decrease an increase rate of carbon that increases from the correction and increase a decrease rate of carbon that decreases from the correction.

Alternatively, according to an embodiment of the present invention, when the increase in the inflation rate is greater than or equal to a threshold, the carbon amount corresponding to the default carbon emission right 1100 may be set to decrease and the correction amount corrected in consideration of the charging habit of the user may also decrease an increase rate of carbon that increases from the correction and increase a decrease rate of carbon that decreases from the correction without considering the set inflation rate.

Although the above example pertains to individuals, a transportation company operating EVs may be allocated a plurality of default carbon emission rights 1100 of a plurality of EVs and a carbon emission right 1120 determined by correcting the plurality of default carbon emission rights 1100.

That is, the method of managing carbon emission rights in an EV ecosystem according to an embodiment of the present invention may include receiving, by an EV ecosystem management device, EV eco data including activity data of EV ecosystem participating devices and generating, by the EV ecosystem management device, carbon emission rights based on the EV eco data.

The generating of carbon emission rights may include determining, by the EV ecosystem management device, a default carbon emission right based on EV eco data and generating, by the EV ecosystem management device, a carbon emission right by adjusting the default carbon emission right based on the EV eco data.

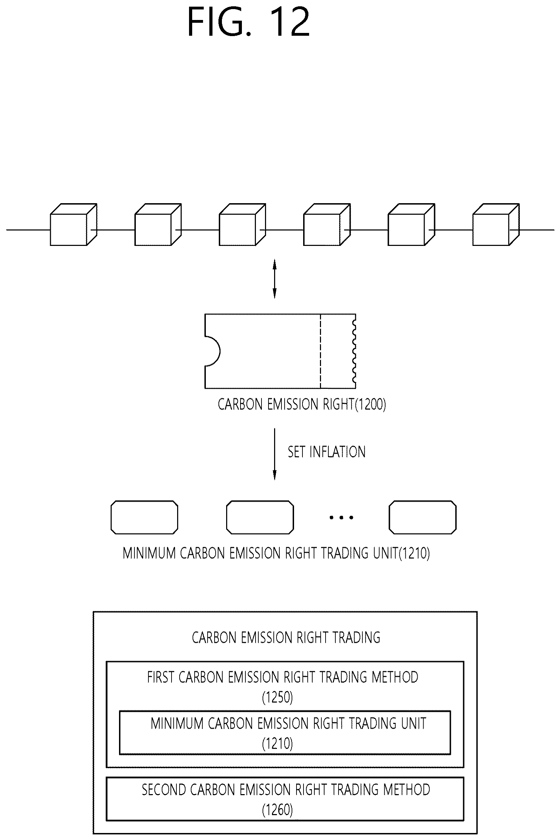

FIG. 12 is a conceptual diagram illustrating a method of facilitating liquidity and trading carbon emission rights according to an embodiment of the present invention.

In FIG. 12, a method of facilitating liquidity and trading carbon emission rights for trading and use of carbon emission rights is disclosed.

Referring to FIG. 12, for liquidation of carbon emission rights 1200 for trading carbon emission rights 1200, a minimum trading unit of carbon emission rights 1200 (hereinafter, a minimum carbon emission right trading unit 1210) may be set. The minimum carbon emission right trading unit 1210 may be determined based on the minimum tradeable carbon amount.

The minimum carbon emission right trading unit 1210 may be adaptively changed and determined in consideration of a set inflation that considers the expansion value of the EV eco ecosystem. When the minimum carbon emission right trading unit 1210 is set relatively high, the conversion rate to E-points may be lowered and the inflow of E-points into the EV eco ecosystem may be delayed. Therefore, the minimum carbon emission right trading unit 1210 may be adaptively determined in consideration of the set inflation.

Carbon emission rights may be traded through a first carbon emission right trading method 1250 and a second carbon emission right trading method 1260. In the case of the second carbon emission right trading method 1260, trading is conducted without setting the minimum carbon emission right trading unit 1210, and in the case of the first carbon emission right trading method 1250, trading may be conducted with the minimum carbon emission right trading unit 1210 set.

The generation, retirement, and trading of carbon emission rights 1200 may be managed based on blockchain. When a carbon emission right generation request transaction is transmitted to the blockchain, carbon emission rights 1200 may be generated through a smart contract and delivered to a carbon emission right receiving wallet of the user. The carbon emission right generation request transaction may be a transaction for requesting carbon emission rights 1200 determined based on a carbon emission right generation algorithm. Users or corporations may check received carbon emission rights 1200 through an application.

When carbon emission rights 1200 are generated and transmitted, information about generation and transmission of carbon emission rights may be recorded on the blockchain. Carbon emission rights 1200 may be generated based on a minimum generation unit. The minimum carbon emission right trading unit 1210 may be set as n times the minimum generation unit.

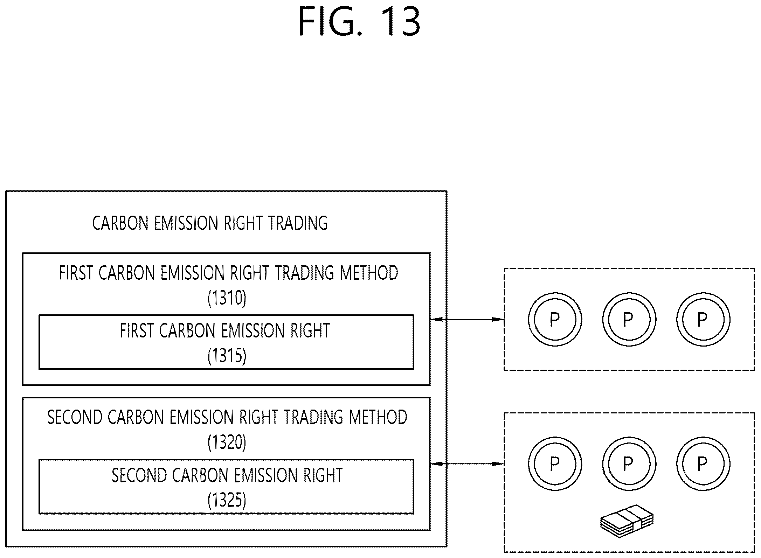

FIG. 13 is a conceptual diagram illustrating a method of trading carbon emission rights according to an embodiment of the present invention.

In FIG. 13, a trading method of trading carbon emission rights is disclosed.

Referring to FIG. 13, carbon emission right trading may be divided into a first carbon emission right trading method 1310 in which new E-points are newly generated and traded, and a second carbon emission right trading method 1320 in which trading is based on existing issued E-points and fiat currency.

According to the first carbon emission right trading method 1310, trading may be conducted in minimum carbon emission right trading units and new E-points may be newly issued in exchange for carbon emission rights. In the first carbon emission right trading method 1320, new E-points are issued on the blockchain based on a new E-point issuance request transaction by a separate EV ecosystem management device rather than an exchange, and carbon emission rights and E-points are traded.

That is, the first carbon emission right trading method 1310 may be a transaction that newly introduces E-points into the EV eco ecosystem.

According to the second carbon emission right trading method 1320, trading may be conducted based on a carbon emission right exchange regardless of the minimum carbon emission right trading units. For example, the selling price of sellers selling carbon emission rights and the buying price of buyers purchasing carbon emission rights may be determined and traded based on fiat currency or E-points.

According to an embodiment of the present invention, corporations that need carbon emission rights may purchase large units of carbon emission rights through the second carbon emission right trading method 1320. Corporations may request to purchase carbon emission rights at a fixed price from the exchange, and the exchange may collect carbon emission rights within the exchange at a fixed price and sell the carbon emission rights through over-the-counter trading.

That is, the second carbon emission right trading method 1320 may be a transaction based on E-points or fiat currency that is already present within the EV eco ecosystem.

Furthermore, according to an embodiment of the present invention, carbon emission rights may also be traded as separate tokens, with first carbon emission rights 1315 tradeable through the first carbon emission right trading method 1310 and second carbon emission rights 1325 tradeable through the second carbon emission right trading method 1320.

The first carbon emission rights 1315 are carbon emission rights traded in minimum carbon emission right trading units considering the set inflation rate. The second carbon emission rights 1325 are carbon emission rights traded at prices determined by buyers and suppliers without separate price constraints.

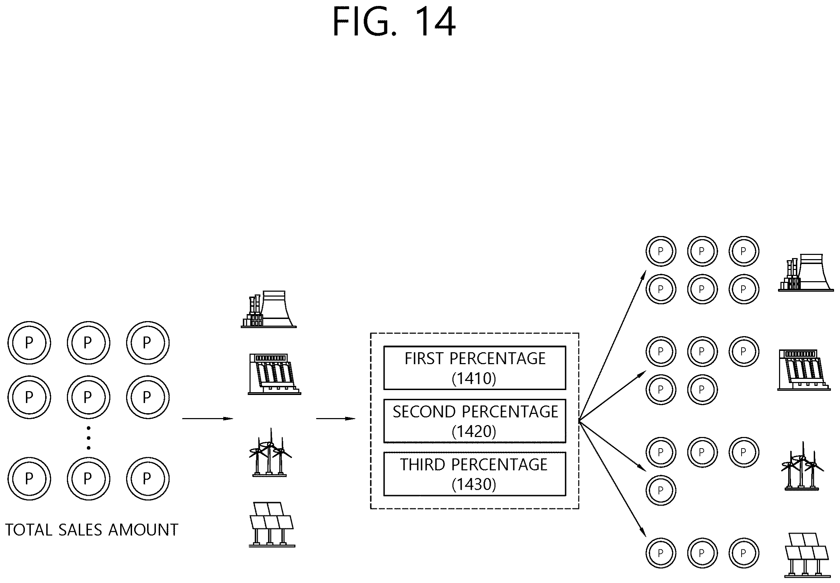

FIG. 14 is a conceptual diagram illustrating a method of providing incentives according to a power generation source when generating electric energy according to an embodiment of the present invention.

FIG. 14 shows a method of providing incentives in an electric energy sales process according to a power generation source (solar, wind, nuclear, thermal, etc.) used to generate electric energy.

Referring to FIG. 14, when selling electric energy to users, the price per kWh may be fixed and not vary according to a power generation source.

However, when paying EV power plants for the produced electric energy, different prices per kWh may be paid to the EV power plants considering the power generation sources of the EV power plants.

In the EV ecosystem, different incentives are granted for electric energy based on power generation sources, and different prices may be paid to EV power plants based on power generation sources.

When different incentives are granted for electric energy based on power generation sources, a greater incentive may be provided for electric energy generated by an EV power plant using renewable energy as a power generation source, and a relatively higher price per kWh (e.g., more E-points) may be paid.

The magnitude of the incentive for electric energy may be determined in consideration of a current price of electric energy sold at the consumer level, a cost of electric energy produced by each power generation source, and a percentage of electric energy produced by each power generation source.

For example, there may be an EV power plant A using solar energy, which is renewable energy, as a power generation source and an EV power plant B using thermal power, which is non-renewable energy, as a power generation source. It may be assumed that the electric energy supply by the EV power plant A (solar) accounts for 1/5 of the total electric energy supply and the electric energy supply by the EV power plant B (thermal) accounts for 4/5 of the total electric energy supply.

When electric energy is sold to consumers at a price of 10 per kWh and a total of 1000 kWh of electric energy is sold, the total sales amount of electric energy may be 10,000.

A first percentage 1410 (e.g., 50%) of the total sales amount may be primarily allocated in consideration of the supply volume.

When the first percentage 1410 is 50%, 50% of the total sales amount of 10,000, or 5,000, is a primary allocation value, with 1,000, which is 1/5 of 5,000, allocated to the EV power plant A (solar) and 4,000, which is 4/5 of 5,000, allocated to the EV power plant B (thermal).

A second percentage 1420 (e.g., 30%) of the total sales amount may be secondarily allocated in consideration of the electric energy production costs according to each power generation source. For example, when the electric energy production cost of solar power generation is 2 and the electric energy production cost of thermal power generation is 1, 2,000, which is 2/3 of 3,000 based on the second percentage 1420 of 30% of total sales amounts, is allocated to the EV power plant A (solar), and 1,000, which is 1/3 of 3,000, is allocated to the EV power plant B (thermal).

Finally, a third percentage 1430 (e.g., 20%) of the total sales amount may be allocated in consideration of incentives according to a power generation source. For example, incentives according to a power generation source may be set and may be allocated to renewable energy sources. When thermal and solar are the only power generation sources, the remaining 2,000 may be provided as an incentive for solar energy, which is renewable energy.

The second percentage 1420 may change according to changes in electric energy production costs according to each power generation source. The larger the gap in electric energy production costs according to each power generation source becomes, the larger the second percentage 1420 may be set, and the smaller the gap in electric energy production costs according to each power generation source becomes, the smaller the second percentage 1420 may be set.

The third percentage 1430 may change in consideration of the percentage of electric energy supplied by EV power plants using renewable energy sources to the total electric energy supply. The third percentage 1430 may be adjusted to provide more incentives as renewable energy sources are relatively fewer among all power generation sources.

The first percentage 1410 may also change according to adjustments of the second percentage 1420 and the third percentage 1430.

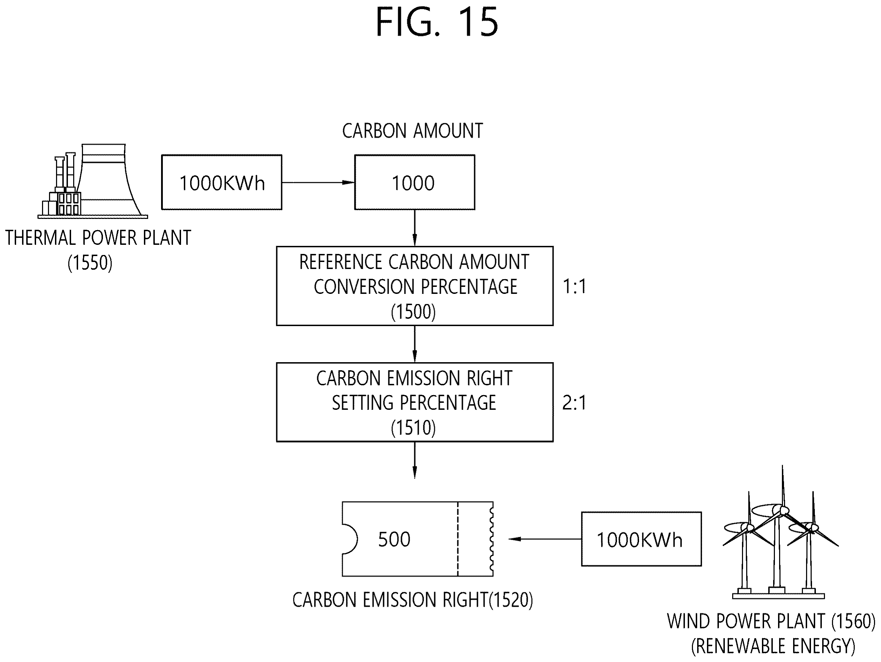

FIG. 15 is a conceptual diagram illustrating a method of determining carbon emission rights according to a power generation source when generating electric energy according to an embodiment of the present invention.

In FIG. 15, an electric energy sales process for providing carbon emission rights according to power generation sources (solar, wind, nuclear, thermal, and the like) used to generate electric energy is disclosed.

Referring to FIG. 15, different carbon emission rights may be provided according to a power generation source of an EV power plant.

Carbon emission rights 1520 may be provided to EV power plants 1560 that do not emit carbon and use renewable energy as a power generation source. The carbon emission rights 1520 may be allocated to the EV power plants 1560 in consideration of the carbon amount reduced by the EV power plants 1560 that use renewable energy as a power generation source. For example, the carbon amount generated when an EV power plant 1550 that uses non-renewable energy as a power generation source produces 000 kWh of electric energy may be determined as a value of 1000. The percentage for determining the carbon amount generated by electric energy produced based on non-renewable power generation sources may be defined as a reference carbon amount conversion percentage 1500.

An EV power plant 1560 that uses renewable energy as a power generation source may be allocated a carbon emission right 1520 determined based on the reference carbon amount conversion percentage 1500 and a carbon emission right setting percentage 1510.

It may be assumed that the EV power plant 1560 using renewable energy as a power generation sources produces 1000 kWh of electric energy and the reference carbon amount conversion percentage 1500 is 1:1. In this case, by considering the carbon emission right setting percentage 1510 (e.g., 2:1) in addition to 1000 determined by the reference carbon amount conversion percentage 1500, the EV power plant 1560 may finally receive a carbon emission right 1520 corresponding to 500 (1/2 of 1000).

The reference carbon amount conversion percentage 1500 and the carbon emission right setting percentage 1510 may change in consideration of the percentage of renewable energy sources to the total electric energy supply. When the proportion of renewable energy sources among all power generation sources is relatively low, the reference carbon amount conversion percentage 1500 and the carbon emission right setting percentage 1510 may be set higher, and a carbon emission right corresponding to a larger carbon amount may be allocated to an EV power plant 1560 that uses renewable energy as a power generation source.

The method of determining the value of electric energy in consideration of power generation sources in an EV ecosystem may include determining, by an EV ecosystem management device, an incentive for an EV power plant based on a power generation source of the EV power plant and determining, by the EV ecosystem management device, a carbon emission right to be allocated to the EV power plant based on the power generation source of the EV power plant.

The magnitude of the incentive may be determined in consideration of the current price of electric energy sold at the consumer level, the cost of electric energy produced by each power generation source, and the percentage of electric energy produced by each power generation source, and the carbon emission right may be determined based on a reference carbon amount conversion percentage and a carbon emission right setting percentage.

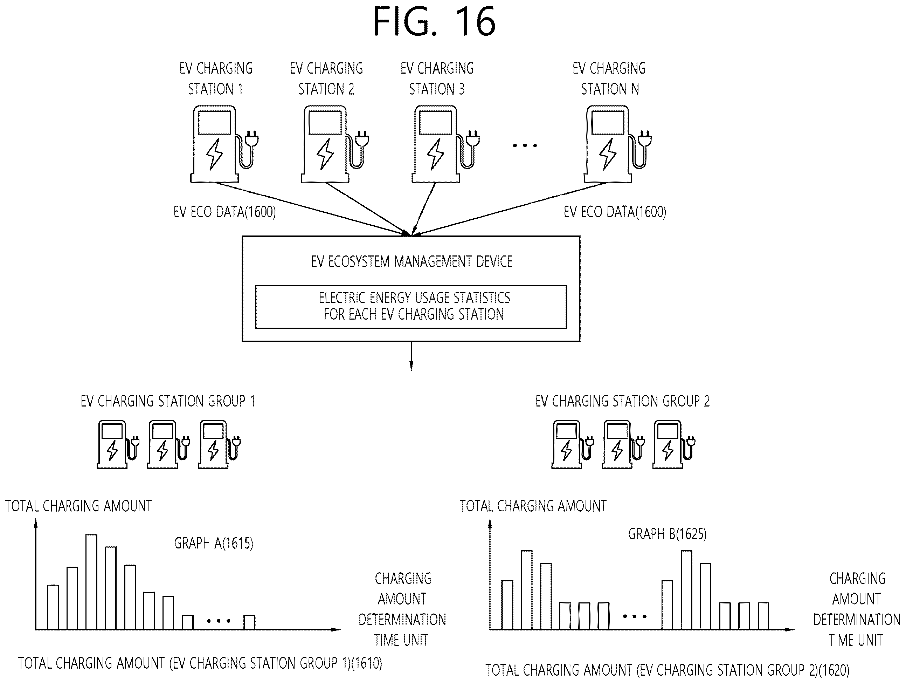

FIG. 16 is a conceptual diagram illustrating a method of providing electric energy to an EV according to an embodiment of the present invention.

In FIG. 16, a method of providing electric energy at different prices at EV charging stations based on electric energy usage statistics is disclosed.

Referring to FIG. 16, electric energy is discarded because it is difficult to use for charging when the electric energy is not used after being produced. Therefore, in order to increase the efficiency of use of the electric energy, electric energy usage statistics data are generated through EV eco data 1600 of the EV charging stations, and the electric energy may be supplied at different prices according to time using the electric energy usage statistics data.

The EV ecosystem management device may analyze the EV eco data 1600 received from the plurality of EV charging stations to determine the electric energy usage statistics.

The EV eco data 1600 may include energy source information, charging time information, charging type (slow speed or fast speed) information, and charging amount information.

The energy source information may include information on the EV power plant that supplies electric energy to the EV charging stations.

The charging time information may include information on a time when the EV charging was performed.

The charging type information may include information on the type of charging, such as which of slow charging and fast charging was performed.

The charging amount information may include information on an amount of charge charged in one charge.

The EV ecosystem management device may control the supply of the electric energy to the EV charging stations at different prices for each location and each time to increase the efficiency of use of the electric energy on the basis of the EV eco data generated for each location and each time.

As described above in FIG. 5, the total charging amount by time zone may be determined based on the EV eco data of the EV charging station group determined in consideration of the similarity between the EV charging stations. A time unit for determining the total charging amount by time zone may be expressed by the term "charging amount determination time unit."

When the charging amount determination time unit is 1 hour, a total charging amount for each EV charging station group may be determined in 1-hour units on the basis of the EV eco data of the EV charging station group. The total charging amount for each EV charging station group may be expressed by the term "total charging amount (of an EV charging station group)."

For example, graph A 1615 for a total charging amount (of an EV charging station group 1) 1610 is a graph showing a total charging amount (of the EV charging station group 1) 1610 for each charging amount determination time unit by adding the charging amount for each charging amount determination time unit of EV charging station 1, EV charging station 2, and EV charging station 3 included in the EV charging station group 1. Graph A 1615 for the total charging amount (of the EV charging station group 1) 1610 may show that the charging amount is concentrated during a specific time zone (rush hour) and the total charging amount is maintained at a constant level even before 12 o'clock after work hours.

Graph B for a total charging amount (of an EV charging station group 2) 1620 is a graph showing a total charging amount (of the EV charging station group 2) 1620 for each charging amount determination time unit by adding the charging amount for each charging amount determination time unit of EV charging station 4, EV charging station 5, and EV charging station 6 included in the EV charging station group 2. Graph B 1625 for the total charging amount (of the EV charging station group 2) 1620 may show that the charging amount is concentrated before and after work hours and the charging amount is maintained at a constant level even after 12 o'clock after work hours.

In this way, data on the total charging amount (of the EV charging station groups) for each charging amount determination time unit may be collected for each EV charging station group, and electric energy prices may be adjusted according to the charging time for each EV charging station group in consideration of the data on the total charging amount (of the EV charging station group) for each charging amount determination time unit.

The adjustment of the electric energy prices according to the charging time for each EV charging station group may be performed to disperse use amounts in time zones in which the use of electric energy is relatively concentrated and promote use amounts in time zones in which use of electric energy is relatively low.

FIG, 17 is a conceptual diagram illustrating an algorithm for determining electric energy prices using an EV according to an embodiment of the present invention.

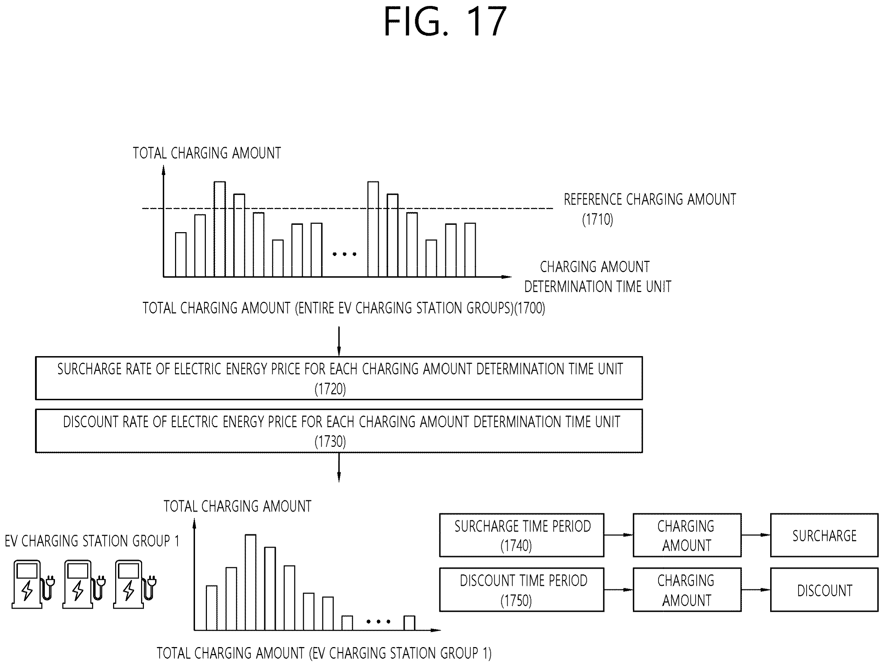

In FIG. 17, a method of determining electric energy prices based on an algorithm for determining electric energy prices by time zone is disclosed.

Referring to FIG. 17, a basic electric energy price may be set, and the electric energy prices by time zone may be determined using a discount on the electric energy price by time zone and a surcharge on the electric energy price by time zone.

Discount rates of the electric energy prices by time zone and surcharge rates of the electric energy prices by time zone may be determined in consideration of the total charging amount of all the EV charging station groups for each charging amount determination time unit and a reference charging amount 1710. The total charging amount of all the EV charging station groups for each charging amount determination time unit may be an amount of electric energy used by all the EV charging stations, measured for each charging amount determination time unit. Hereinafter, the total charging amount of all the EV charging station groups for each charging amount determination time unit is expressed by the term "total charging amount (of all the EV charging station groups)" 1700.

The reference charging amount 1710 may be a mean value of the total charging amount (of all the EV charging station groups) 1700 for each charging amount determination time unit.

As an example, a first charging amount determination time unit may be from 8:00 to 9:00, and the total charging amount (of all the EV charging station groups) 1700 may be 10,000 in the first charging amount determination time unit. A second charging amount determination time unit may be from 21:00 to 22:00, and the total charging amount (of all the EV charging station groups) 1700 may be 3,000 in the second charging amount determination time unit.

When the reference charging amount 1710 is 7,000, 3,000, which is obtained by subtracting the reference charging amount 1710 7,000 from the total charging amount (of all the EV charging station groups) 1700 10,000 in the first charging amount determination time unit, may be used to determine the surcharge rate of the electric energy price in the first charging amount determination time unit.

When the reference charging amount 1710 is 7,000, -4,000, which is obtained by subtracting the reference charging amount 1710 7,000 from the total charging amount (of all the EV charging station groups) 1700 3,000 in the second charging amount determination time unit, may be used to determine the discount rate of the electric energy price in the second charging amount determination time unit.

In the above manner, a surcharge rate 1720 of the electric energy price and a discount rate 1730 of the electric energy price may be determined for each charging amount determination time unit.

According to the embodiment of the present invention, the surcharge rate 1720 of the electric energy price and the discount rate 1730 of the electric energy price may be additionally adjusted for each EV charging station group.

As shown in graph A for the total charging amount by the EV charging station group and in graph B for the total charging amount by the EV charging station group, the amount of electric energy used for each EV charging station group by time zone may differ.

In order to reduce a change in usage by time zone, the time zone may be divided for each charging amount determination time unit into a surcharge time zone 1740 in which the electric energy price is surcharged and a discount time zone 1750 in which the electric energy price is discounted.

Electric energy prices of a plurality of EV charging station included in a specific EV charging station group may be additionally adjusted based on data on the charging amount in the surcharge time zone 1740 and the charging amount in the discount time zone 1750 of the specific EV charging station group.

The electric energy price for each specific EV charging station group may be additionally adjusted in such a way that the relatively higher the charging amount in the surcharge time zone 1740 of the specific EV charging station group and the relatively lower the charging amount in the discount time zone 1750 of the specific EV charging station group, the additionally higher the surcharge on the electric energy price for the specific EV charging station group and the additionally lower the discount.

That is, according to the embodiment of the present invention, a method of determining an electric energy value based on electric energy usage statistics in an EV ecosystem may include determining, by an EV ecosystem management device, electric energy usage statistics on the basis of EV eco data received from each of a plurality of EV charging stations, and determining, by the EV ecosystem management device, selling prices of electric energy by time zone at each of the plurality of EV charging stations.

The EV ecosystem management device may set a basic electric energy price and determine the electric energy price by time zone through a discount on the electric energy prices by time zone and a surcharge on the electric energy price by time zone, and a discount rate of the electric energy prices by time zone and a surcharge rate of the electric energy prices by time zone may be determined in consideration of a size of a total charging amount of all EV charging station groups by a charging amount determination time unit and a size of a reference charging amount.

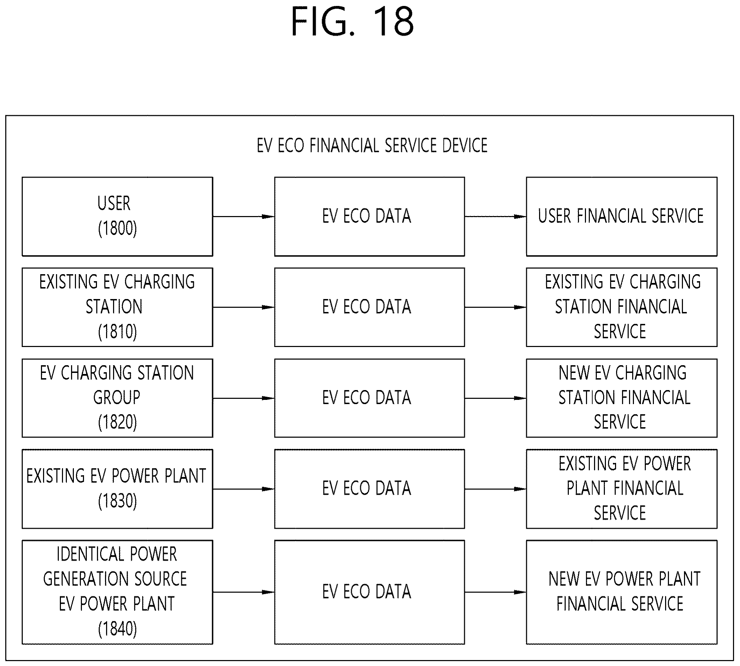

FIG. 18 is a conceptual diagram illustrating a method of providing a financial service based on electric vehicle (EV) eco data according to an embodiment of the present invention.

In FIG. 18, a method of providing a financial service based on EV eco data is disclosed.

Referring to FIG. 18, an EV ecosystem may further include an EV eco financial service device for providing a financial service to EV ecosystem participation devices.

The EV eco financial service device may provide the financial service to a user (e.g., an individual or a company) 1800 on the basis of EV eco data of the user 1800.

The EV eco financial service device may provide the financial service to the user 1800 on the basis of transaction records for existing E-points, transaction records for carbon emission rights, and the like based on the EV eco data of the user 1800.

Further, the EV eco financial service device may provide the financial service to the user 1800 by predicting E-points and carbon emission rights that will be generated in the future on the basis of the EV eco data of the user 1800.

Further, the EV eco financial service device may provide the financial service based on the EV eco data generated from an existing EV charging station 1810 that has been previously built to the existing EV charging station 1810. A financial service for an EV charging station that will be newly built may be provided based on EV eco data generated from an EV charging station group 1820 corresponding to the new EV charging station in consideration of a location at which the EV charging station will be installed.

Further, the EV eco financial service device may provide the financial service based on EV eco data generated from an existing EV power plant 1830 that has been previously built to the existing EV power plant 1830. A financial service for an EV power plant that will be newly built may be provided based on EV eco data generated from an identical power generation source EV power plant 1840 that has the same power generation source as the new EV power plant.

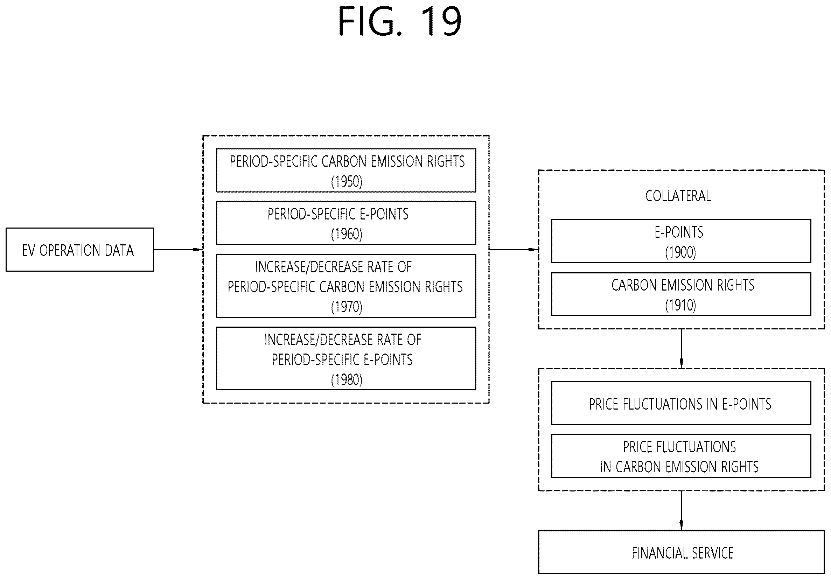

FIG. 19 is a conceptual diagram illustrating a method of providing a financial service based on EV eco data according to an embodiment of the present invention.

In FIG. 19, a method in which an EV eco financial service device provides a financial service to a user by predicting E-points and carbon emission rights that will be generated in the future on the basis of EV eco data of the user and company is disclosed.

Referring to FIG. 19, the financial service may be provided to individuals by predicting E-points and carbon emission rights that have already been generated and E-points and carbon emission rights that will be generated in the future on the basis of the EV eco data of the individuals.

The EV eco financial service device may determine the individuals' E-points and carbon emission rights for a specific period that can be used as collateral, and provide the financial service on the basis of the individuals' E-points and carbon emission rights that will be used as collateral.

For example, the carbon emission rights obtainable to the individuals in the future may be predicted based on the individuals' monthly EV operation data. Further, in the case of a commercial EV, E-points obtainable to the user in the future may be predicted based on information on monthly E-points acquired through the EV.

Predictions for future obtainable carbon emission rights 1910 and future obtainable E-points 1900 may be performed based on period-specific carbon emission rights 1950 and period-specific E-points 1960 that have been obtained by period, and an increase/decrease rate 1970 of the period-specific carbon emission rights and an increase/decrease rate 1980 of the period-specific E-points.

A financial service (e.g., a loan service) based on the future obtainable carbon emission rights 1910 and the future obtainable E-points 1900 may be determined by predicting the future obtainable carbon emission rights 1910, the future obtainable E-points 1900, price fluctuations in the carbon emission rights, and price fluctuations in the E-points.

Further, according to the embodiment of the present invention, the EV eco financial service device may determine a financial service provision grade of an individual and a company on the basis of EV eco data of the individual and the company, and provide a financial service on the basis of the financial service provision grade.

The financial service provision grade may be determined in consideration of data on financial accidents such as loan delinquency and loan recovery failure for each user group.

Candidate user groups may be determined by being primarily classified on the basis of similarities of period-specific carbon emission rights, period-specific E-points, an increase/decrease rate of the period-specific carbon emission rights, and an increase/decrease rate of the period-specific E-points (hereinafter, referred to as "EV eco data similarities").

The EV eco data similarities may be determined based on the similarity of each of the period-specific carbon emission rights, the period-specific E-points, the increase/decrease rate of the period-specific carbon emission rights, and the increase/decrease rate of the period-specific E-points. For example, the EV eco data similarities may be determined by assigning weights to a first sub-similarity of the period-specific carbon emission rights, a second similarity of the period-specific E-points, a third similarity of the increase/decrease rate of the period-specific carbon emission rights, and a fourth similarity of the increase/decrease rate of the period-specific E-points.

The candidate user groups may be secondarily grouped based on loan delinquency and loan recovery failure data for each candidate user group. The candidate user groups may be additionally grouped and determined as the user groups on the basis of a similarity of the loan delinquency and loan recovery failure data for each group (hereinafter, referred to as a "financial data similarity"). The financial data similarity may be determined in consideration of a loan delinquency rate and loan recovery failure rate of users included in the candidate user group.

Criteria for determining the EV eco data similarity and financial data similarity for determining candidate user groups and user groups may be changed according to changes in financial service feedback data and an EV ecosystem environment, and accordingly, the candidate user groups and the user groups may be changed.

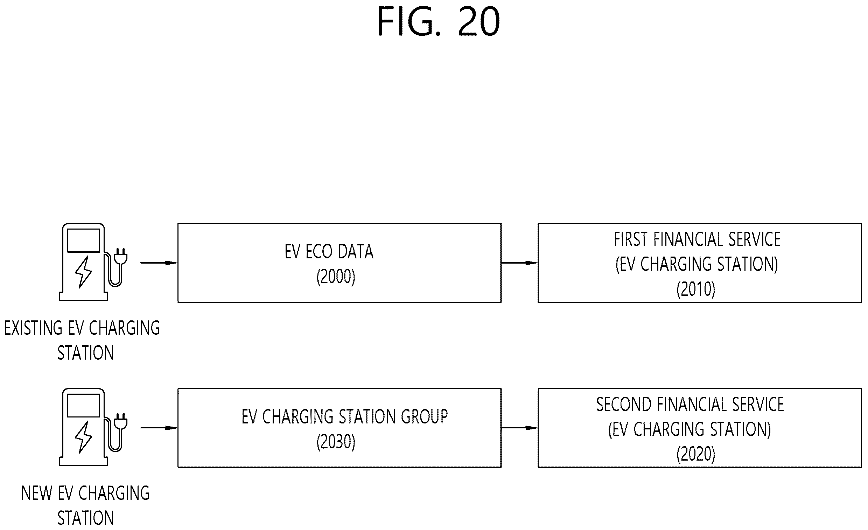

FIG. 20 is a conceptual diagram illustrating a method of providing financial services to EV charging stations according to an embodiment of the present invention.

In FIG. 20, a method of providing financial services to EV charging stations is disclosed.

Referring to FIG. 20, as described above, the EV eco financial service device may provide financial services based on EV eco data 2000 generated from an existing EV charging station that has been previously built to the existing EV charging station.

Further, the EV eco financial service device may provide financial services based on EV eco data generated from an EV charging station group 2030 corresponding to an EV charging station that will be newly built in consideration of an installation location of the new EV charging station.

The financial service for the existing EV charging station may be expressed by the term a "first financial service (EV charging station) 2010," and the financial service for the new EV charging station may be expressed by the term a "second financial service (EV charging station) 2020."

Unlike the first financial service (EV charging station) 2010, the second financial service (EV charging station) 2020 may be provided in consideration of a change in electric energy sales revenue resulting from the new EV charging station. The change in electric energy sales revenue resulting from the new EV charging station may be determined in consideration of the expansion of the EV ecosystem environment in the location at which the EV charging station is built.

Further, the first financial service (EV charging station) 2010 and the second financial service (EV charging station) 2020 may be provided in consideration of a change in electric energy sales revenue due to adjustment of electric energy prices according to charging time as described above.

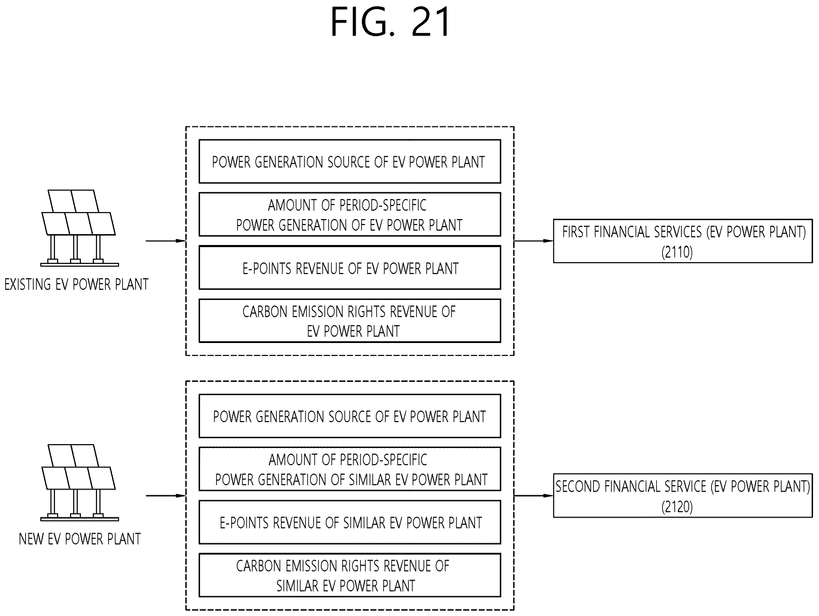

FIG. 21 is a conceptual diagram illustrating a method of providing financial services to EV power plants according to an embodiment of the present invention.

In FIG. 21, a method of providing financial services to EV power plants is disclosed.

Referring to FIG. 21, financial services for EV power plants may include first financial services (EV power plant) 2110 for an EV power plant that has already been built, and second financial services (EV power plant) 2120 for an EV power plant that will be newly built.

The first financial services (EV power plant) 2110 may be provided based on information on a power generation source of the EV power plant, an amount of period-specific power generation of the EV power plant, E-points revenue of the EV power plant, and carbon emission rights revenue of the EV power plant.

The first financial services (EV power plant) 2110 may be provided differently according to whether the power generation source of the EV power plant is renewable energy.

For example, renewable energy such as solar power and wind power do not require raw materials for power generation, and non-renewable energy such as thermal power requires raw materials for power generation, and thus the EV eco financial service device may perform different determinations according to the power generation source when providing the first financial service(EV power plant) 2110.

Further, the amount of period-specific power generation of the EV power plant for the determination of the first financial service (EV power plant) 2110 may be set differently according to the power generation source of the EV power plant, and the first financial service (EV power plant) 2110 may provide financial services in different cycles in consideration of the amount of period-specific power generation.

The power generation sources, such as solar power, wind power, etc., may generate different amounts of electric energy with a certain cycle according to seasonal changes. Therefore, in a case in which the power generation source is renewable energy, an electric energy production cycle may be determined based on data on the amount of electric energy produced by period, and the amount of period-specific power generation of the EV power plant for the determination of the first financial service (EV power plant) 2110 may be determined based on the electric energy production cycle.

In a case in which the first financial service (EV power plant) 2110 is a loan service, an expiration date of the loan service may be determined in consideration of data on the amount of period-specific power generation of the EV power plant.

The second financial service (EV power plant) 2120 may be provided based on information on a power generation source of an EV power plant that will be newly built, an amount of period-specific power generation of a similar EV power plant, E-points revenue of the similar EV power plant, and carbon emission rights revenue of the similar EV power plant.

The similar EV power plant may vary depending on its power source.

In a case in which the power generation source is renewable energy, a power generation source located in an area with the most similar power generation environment may be determined as the similar EV power plant. The similar power generation environment may vary depending on the power generation source. In a case in which the renewable energy is wind power, an EV power plant that uses the wind power as the power generation source located closest thereto may be determined as the similar EV power plant. In a case in which the renewable energy is solar power, an EV power plant that uses the solar power as the power generation source located closest thereto may be determined as the similar EV power plant. In the case of solar power, an EV power plant with similar weather data and similar amount of sunlight in an area in which the EV power plant is installed may be determined as the similar EV power plant.

The embodiments of the present invention described above may be implemented in the form of program instructions that can be executed through various computer units and recorded on computer readable media. The computer readable media may include program instructions, data files, data structures, or combinations thereof. The program instructions recorded on the computer readable media may be specially designed and prepared for the embodiments of the present invention or may be available instructions well known to those skilled in the field of computer software. Examples of the computer readable media include magnetic media such as a hard disk, a floppy disk, and a magnetic tape, optical media such as a compact disc read only memory (CD-ROM) and a digital video disc (DVD), magneto-optical media such as a floptical disk, and a hardware device, such as a ROM, a RAM, or a flash memory, that is specially made to store and execute the program instructions. Examples of the program instruction include machine code generated by a compiler and high-level language code that can be executed in a computer using an interpreter and the like. The hardware device may be configured as at least one software module in order to perform operations of embodiments of the present invention and vice versa.

While the present invention has been described with reference to specific details such as detailed components, specific embodiments and drawings, these are only examples to facilitate overall understanding of the present invention and the present invention is not limited thereto. It will be understood by those skilled in the art that various modifications and alterations may be made.

Therefore, the spirit and scope of the present invention are defined not by the detailed description of the present invention but by the appended claims, and encompass all modifications and equivalents that fall within the scope of the appended claims.

## Claims

1. A method of providing a financial service based on electric energy in an electric vehicle (EV) ecosystem, comprising:
receiving, by an EV ecosystem management device, EV eco data from EV ecosystem participation devices; and
providing, by the EV ecosystem management device, a financial service to the EV ecosystem participation device on the basis of the EV eco data.

2. The method of claim 1, wherein the providing of the financial service includes:
predicting, by the EV ecosystem management device, E-points and carbon emission rights that will be generated in the future on the basis of the EV eco data; and
providing, by the EV ecosystem management device, the financial service using the E-points and the carbon emission rights as collateral.

3. The method of claim 2, wherein the EV ecosystem participation devices include a user, an EV charging station, and an EV power plant, and
the EV ecosystem management device provides different financial services to new EV charging stations and new EV power plants, which will be newly installed, and existing EV charging stations and existing EV power plants that have been installed.

4. An electric vehicle (EV) ecosystem management device for providing a financial service based on electric energy in an EV ecosystem, which is implemented to:
receive EV eco data from EV ecosystem participation devices; and
provide a financial service to the EV ecosystem participation device on the basis of the EV eco data.

5. The EV ecosystem management device of claim 4, which is configured to:
predict E-points and carbon emission rights that will be generated in the future on the basis of the EV eco data; and
provide the financial service using the E-points and the carbon emission rights as collateral.

6. The EV ecosystem management device of claim 5, wherein the EV ecosystem participation devices include a user, an EV charging station, and an EV power plant, and
the EV ecosystem management device provides different financial services to new EV charging stations and new EV power plants, which will be newly installed, and existing EV charging stations and existing EV power plants that have been installed.
